# EUROPÄISCHE PATENTSCHRIFT

(11) **EP 3 922 924 B1**
(45) Veröffentlichungstag und Bekanntmachung des Hinweises auf die Patenterteilung: **22.05.2024**
(21) Anmeldenummer: 21177572.1
(22) Anmeldetag: 03.06.2021
(51) Int. Cl.: F25B 40/00, F25B 49/02

(54) **VERFAHREN ZUM BETRIEB EINER KOMPRESSIONSKÄLTEANLAGE UND KOMPRESSIONSKÄLTEANLAGE**
COMPRESSION COOLING SYSTEM AND METHOD FOR OPERATING A COMPRESSION COOLING SYSTEM
PROCÉDÉ DE FONCTIONNEMENT D'UNE INSTALLATION DE RÉFRIGÉRATION À COMPRESSION ET INSTALLATION DE RÉFRIGÉRATION À COMPRESSION

(30) Priorität: 09.06.2020 DE 102020115273
(43) Veröffentlichungstag der Anmeldung: 15.12.2021
(73) Patentinhaber: Stiebel Eltron GmbH & Co. KG, 37603 Holzminden (DE)
(72) Erfinder: Herrs, Martin, 37671 Höxter (DE)

(56) Entgegenhaltungen:
- EP-A2- 1 892 489
- DE-A1-102015 104 464
- DE-U1-202014 010 802

## Beschreibung

Die Erfindung betrifft ein Verfahren zum Betrieb einer Kompressionskälteanlage sowie eine zugehörige Kompressionskälteanlage mit einem Kältemittel, einem Verdampfer, einem Verdichter, einem Verflüssiger, einem Drosselorgan und einer Steuereinheit.

Derartige Kompressionskälteanlagen, beispielsweise in Form von Wärmepumpen, mit einem Dampfkompressionssystem in welchem ein gasförmiges Kältemittel von einem mittels der Steuereinheit, die beispielsweise einen Regler aufweist, gesteuerten Verdichter von einem Niederdruck auf einen Hochdruck verdichtet wird, sind bekannt.

Das Kältemittel wird durch den Verflüssiger getrieben, in dem es eine Heizwärme an ein in einem Wärmesenkensystem befindliches Heizmedium abgibt. Eine innere Wärme wird in einem optionalen inneren Wärmeübertrager, beispielsweise in Form eines Rekuperators, zwischen dem unter dem Hochdruck vom Verflüssiger zum Expansionsventil strömenden Kältemittel und dem vom Verdampfer zum Verdichter unter dem Niederdruck strömende Kältemittel übertragen.

Das Kältemittel wird weiter in einer Hochdruckströmungsrichtung zu einem vom Regler gesteuerten Expansionsventil geführt, in dem das Kältemittel vom Hochdruck auf den Niederdruck abhängig von einem Regelwert entspannt wird. Das auf dem Niederdruck befindliche Kältemittel verdampft in dem Verdampfer bei Aufnahme von Quellwärme.

In DE 20 2014 010 802 U1 wird eine Wärmepumpenvorrichtung mit einem Verflüssiger, einem Verdampfer, einem elektronischen Expansionsventil, einer Verdichtereinheit mit einem ersten und zweiten Verdichter, die in Reihe geschaltet sind, und einer Steuereinheit beschrieben zum Steuern des Verdampfers, des Verflüssigers, des elektronischen Expansionsventils und der Verdichtereinheit, wobei die Steuereinheit dazu ausgestaltet ist, den Betrieb des ersten und/oder zweiten Verdichters zu steuern, wobei die Steuereinheit eine Verdichtereinschalteinheit aufweist, welche ein Signal ausgibt, das den ersten Verdichter, den zweiten Verdichter oder den ersten und zweiten Verdichter in Abhängigkeit einer Außentemperatur, einer Heizkreis-Solltemperatur und/oder einer Heißgastemperatur aktiviert, dadurch gekennzeichnet, dass die Steuereinheit eine Drehzahlbegrenzungseinheit aufweist, wobei die Drehzahlbegrenzungseinheit die Drehzahlbereiche des ersten und/oder zweiten Verdichters begrenzt und in einer Verdichterdrehzahl-Abgleicheinheit ein Abgleich der Verdichterdrehzahlen im Zweiverdichter-Betrieb erfolgen kann.

Die DE 102015 104 464 A1 betrifft eine Regelanordnung für einen R744-Kältemittelkreislauf, enthaltend einen mechanisch oder elektrischen angetriebenen Verdichter, einen Gaskühler, einen Akkumulator-Innerer Wärmeübertrager, ein elektrisch regelbares Expansionsorgan und einen Verdampfer sowie eine Regeleinrichtung mit Sensoren, dadurch gekennzeichnet, dass der Temperatur- und Drucksensor zur Messung des Druckes und der Temperatur des Kältemittels nach dem Verdichter, der Temperatursensor zur Messung der Temperatur des Kältemittels nach dem Gaskühler und der Temperatursensor zur Messung der Temperatur der gekühlten Luft im Verdampfer ausgebildet sind und dass die Regeleinrichtung als Kaskadenregelung derart ausgebildet ist, dass ein Führungsregler den Soll-Regelstrom oder den Soll-Saugdruck und ein Folgeregler den Regelstrom oder die Drehzahl des Verdichters regeln, wobei die Reglerstruktur als kombinierte Komfort- und Komponentenschutzregelung ausgebildet ist.

In der EP 1 892 489 A2 wird ein Verfahren zum Überwachen eines Kompressionskältekreises mit zumindest einem Verdichter, einem Kondensator, einer Drossel und einem Verdampfer vorgeschlagen, wobei der Druck pH auf der Hochdruckseite zwischen Verdichter und Drossel erfasst wird, die Siedetemperatur auf der Hochdruckseite als Funktion des Drucks auf der Hochdruckseite und des Kältemittels berechnet wird, die Temperatur zwischen Kondensator und Drossel erfasst wird, die Temperaturdifferenz zwischen der Temperatur und der Siedetemperatur gebildet wird und in dem Fall, in dem die Temperaturdifferenz einen vorgegebenen Grenzwert erstmals unterschreitet, ein Fehlerstatus aktiviert wird und in dem Fall, in dem die Temperaturdifferenz den vorgegebenen Grenzwert wiederholt mit einer vorgegebenen Anzahl unterschreitet, der Kompressionskältekreis abgeschaltet wird.

Aus DE 101 59 892 A1 ist bei einer Kältemaschine bekannt, insbesondere bei einer Wärmepumpe, einen Rekuperator zu verwenden, womit bei niedrigen Außentemperaturen die Heizleistung auf baulich einfache Weise erhöht werden soll. Hierfür ist der Rekuperator derart dimensioniert, dass er bei niedrigen Verdampfungstemperaturen wenigstens etwa 15% der Heizleistung der Wärmepumpe vom flüssigen Kältemittel auf das gasförmige Kältemittel überträgt. Ein Einspritzventil spritzt flüssiges Kältemittel in den Verdichter, so dass die Verdichtungsendtemperatur unter 120 °C bleibt.

Eine Wärmepumpenanlage mit einem Kältemittelkreislauf ist aus DE 10 2005 061 480 B3 bekannt. Sie ist mit einem Verdichter, einem ersten Wärmeübertrager, einem Drosselorgan, einem Verdampfer und einer 4-2-Wegeventileinheit zum Umschalten zwischen einer ersten (Heizen) und einer zweiten Betriebsart (Kühlen) ausgestattet. Eine Strömungsrichtung des in dem Kältemittelkreislauf befindlichen Kältemittels kann derart umgeschaltet werden kann, dass der erste Wärmeübertrager in der ersten Betriebsart zum Verflüssigen des Kältemittels, und in der zweiten Betriebsart zum Verdampfen des Kältemittels dient, und der zweite Wärmeübertrager in der ersten Betriebsart zum Verdampfen des Kältemittels und in der zweiten Betriebsart zum Verflüssigen des Kältemittels dient, wobei der erste Wärmeübertrager im Kältemittelkreislauf so verschaltet ist, dass er in den beiden Betriebsarten Heizen und Kühlen als Gegenstrom-Wärmeübertrager arbeitet.

Die Regelung der Kompressionskälteanlage muss verschiedene Anforderungen erfüllen, so wird beispielsweise gefordert, dass eine Leistungszahl möglichst hoch ist, um einen möglichst energieeffizienten Betrieb zu erlauben. Zentral ist aber auch, dass die Betriebsgrenzen der Komponenten eingehalten werden.

In diesem Zusammenhang ist insbesondere der Verdichter hervorzuheben, der wie ausgeführt das gasförmige Kältemittel von Niederdruck (ND) auf Hochdruck (HD) verdichtet. Es ist bekannt, zur Leistungsoptimierung Verdichter vorzusehen, die den Betrieb mit unterschiedlichen Drehzahlen ermöglichen. Die Hersteller von derartigen, drehzahlvariablen Verdichtern schreiben neben anderen Betriebsgrenzen beispielsweise vor, dass in Abhängigkeit der Drehzahl sowohl Obergrenzen als auch Untergrenzen für den Niederdruck (ND) und den Hochdruck (HD) einzuhalten sein. Werden die Grenzen entweder auf der Niederdruckseite oder auf der Hochdruckseite überschritten, muss der Betrieb des Verdichters im ungünstigsten Fall abgeschaltet werden.

Vor diesem Hintergrund ist es eine Aufgabe der vorliegenden Erfindung, ein Regelverfahren für die eingangs genannte Kompressionskälteanlage vorzuschlagen, mit welchem ein Überschreiten der Betriebsgrenzen der Komponenten, insbesondere des Verdichters, zuverlässig verhindert werden kann und die resultierenden Leistungseinbußen oder Leistungszahleinbußen auf ein absolut erforderliches Maß begrenzt werden.

Gelöst wir die Aufgabe durch die Verfahrensmerkmale des Anspruchs 1 sowie die Vorrichtungsmerkmale des Anspruchs 10.

Demnach wird gemäß einem ersten Aspekt ein Verfahren zum Regeln einer Kompressionskälteanlage mit einem Kältemittel, einem Verdampfer, einem Verdichter, einem Verflüssiger, einem Drosselorgan und einer Steuereinheit a) zur Erfassung eines Hochdruckes und eines Niederdruckes des Kältemittels in der Kompressionskälteanlage, b) zur Erfassung einer Drehzahl des Verdichters, c) zur Bereitstellung von Drehzahlbereichsklassen des Verdichters, wobei jede Drehzahlbereichsklasse für einen Drehzahlbereich des Verdichters definiert, welche gegensteuernden Aktionen zur Einhaltung des zulässigen Arbeitsbereiches von Komponenten der Kompressionskälteanlage, insbesondere des Verdichters, aus einer Liste möglicher Aktionen zulässig sind; und d) zur Regelung wenigstens eines Aktors der Kompressionskälteanlage, insbesondere wenigstens des Drosselorgans und/oder des Verdichters, basierend auf dem erfassten Hochdruck und dem erfassten Niederdruck, vorgeschlagen.

Jede gegensteuernde Aktion bezieht sich vorzugsweise auf eine zugeordnete Prozesswertbereichsgrenze und auf einen zugeordneten Aktor.

Die gegensteuernde Aktion beeinflusst bei Annäherung an die zugeordnete Prozesswertbereichsgrenze vorzugsweise die Regelung des zugeordneten Aktors.

Die Prozesswertbereichsgrenzen beziehen sich vorzugsweise auf Niederdruck, Hochdruck, Temperatur und/oder Überhitzung.

Das Verfahren umfasst die folgenden Schritte:
- Bestimmen, für die aktuelle Drehzahl des Verdichters, eines maximal zulässigen Hochdrucks, eines minimal zulässigen Hochdrucks, eines maximal zulässigen Niederdrucks und eines minimal zulässigen Niederdrucks;
- Bestimmen von Abständen des aktuellen Hochdrucks zu dem minimal und maximal zulässigen Hochdruck, sowie von Abständen des aktuellen Niederdrucks zu dem maximal und minimal zulässigen Niederdruck;
- Bestimmen der aktuellen Drehzahlbereichsklasse zum Erhalten der zulässigen gegensteuernden Aktionen;
- Bestimmen, je zulässige gegensteuernde Aktion, eines Änderungsfaktors des zu der gegensteuernden Aktion gehörenden Aktors in Abhängigkeit wenigstens eines der bestimmten Abstände;
- Regeln der Kompressionskälteanlage basierend auf den bestimmten Änderungsfaktoren der Aktoren.

Vorzugsweise werden die Abstände als Differenzen bestimmt. Vorzugsweise werden die Änderungsfaktoren der Aktoren für die Regelung der Kompressionskälteanlage mit Aktorstellsignalen, die angesteuert werden, kombiniert.

Die erfindungsgemäße Regelung wählt demnach in Abhängigkeit des aktuellen Drehzahlbereiches des Verdichters die Aktionen aus, die zulässig beziehungsweise sinnvoll sind. In Abhängigkeit des Abstandes des Betriebspunktes von den Betriebsgrenzen des Verdichters werden dann Änderungsfaktoren zu den einzelnen Aktionen bestimmt. Damit kann sichergestellt werden, dass die Kompressionskälteanlage sicher innerhalb der Betriebsgrenzen betrieben wird.

Vorzugsweise wird der maximal zulässige Hochdruck, der minimal zulässige Hochdruck, der maximal zulässige Niederdruck und der minimal zulässige Niederdruck mittels eines Drehzahlkennfeldes des Verdichters, insbesondere durch direktes Ablesen oder Interpolation tabellierter Werte, bestimmt. Hierbei können beispielsweise Tabellen oder Funktionen auf Grundlage der von Verdichterherstellern bereitgestellten Werte vorgesehen sein.

Vorzugsweise enthält das Verfahren einen Schritt des Kombinierens der Änderungsfaktoren des gleichen Aktors. Wenn demnach mehrere Aktionen auf den gleichen Aktor bezogen sind, ergibt sich aus den einzelnen Änderungsfaktoren dieser Aktionen ein kombinierter Änderungsfaktor, der einfach an die Regelung der Kompressionskälteanlage übergeben bzw. damit verrechnet werden kann.

Vorzugsweise umfasst der Schritt des Kombinierens ein Auswählen desjenigen Änderungsfaktors des jeweiligen Aktors, welcher die größte Änderung bewirkt. So wird sichergestellt, dass die Veränderung auch bei mehreren, den gleichen Aktor betreffenden Aktionen in hinreichendem Maß umgesetzt wird. Vorzugsweise sind in diesem Fall sämtliche den gleichen Aktor betreffenden Aktionen gleichgerichtet, d.h. entweder vergrößernd oder reduzierend.

Vorzugsweise werden, weil die Faktoren vorzugsweise multiplikativ appliziert werden, eine Kombination aus gleich- und gegengerichteten Aktionen nicht als Summe verarbeitet, sondern beispielsweise wie folgt: zunächst wird das Maximum aus allen vergrößernden Faktoren ( Faktoren größer 1 ) gebildet und das Minimum aus allen reduzierenden Faktoren ( Faktoren kleiner 1 ) gebildet und diese Teilergebnisse werden multipliziert.

Vorzugsweise ist die Steuereinheit zur Regelung des Drosselorgans, des Verdichters, eines wärmequellenseitigen Lüfters oder einer Solepumpe, und eines wärmesenkenseitigen Aktors wie einer Umwälzpumpe ausgebildet ist.

Vorzugsweise umfasst der Schritt des Regelns der Kompressionskälteanlage basierend auf den Änderungsfaktoren ein Multiplizieren der Stellgrößen der Aktoren mit den Änderungsfaktoren. Dies vereinfacht die Bestimmung der Änderungsfaktoren, da diese unabhängig von der tatsächlichen Stellgröße der Aktoren als relative Änderungen berechnet werden können.

Vorzugsweise umfasst die Liste möglicher zulässiger Aktionen für mehrere der von der Steuereinheit regelbaren Aktoren ein Erhöhen und ein Absenken des jeweiligen Stellgrades des Aktors.

Vorzugsweise ist der Änderungsfaktor auf einen Wertebereich zwischen 0,5 und 1 für Reduzierungen oder zwischen 1 und 2 für Erhöhungen beschränkt. Damit sind hinreichende Korrekturen möglich, die dennoch zu starke Regeleingriffe und damit eine Instabilisierung des Systems vermeiden.

Vorzugsweise berücksichtigt der Schritt des Regelns weitere Randbedingungen des Betriebs, insbesondere ein maximales Druckverhältnis zwischen Hochdruck und Niederdruck und/oder ein Mindestwerte für eine Druckdifferenz zwischen Hochdruck und Niederdruck. Derartige Randbedingungen können beispielsweise auch von dem Verdichterhersteller für den gesamten Betriebsbereich oder bestimmte Drehzahlbereiche vorgeschrieben sein.

Gemäß einem weiteren Aspekt betrifft die Erfindung ferner eine Kompressionskälteanlage mit einem Kältemittel, einem Verdampfer, einem Verdichter, einem Verflüssiger, einem Drosselorgan und einer Steuereinheit. Die Steuereinheit ist ausgebildet a) zur Erfassung eines Hochdruckes und eines Niederdruckes des Kältemittels in der Kompressionskälteanlage, b) zur Erfassung einer Drehzahl des Verdichters, c) zur Bereitstellung von Drehzahlbereichsklassen des Verdichters, wobei jede Drehzahlbereichsklasse für einen Drehzahlbereich des Verdichters definiert, welche gegensteuernden Aktionen aus einer Liste möglicher Aktionen zulässig sind; und d) zur Regelung wenigstens eines Aktors der Kompressionskälteanlage, insbesondere wenigstens des Drosselorgans und/oder des Verdichters, basierend auf dem erfassten Hochdruck und dem erfassten Niederdruck. Die Steuereinheit ist ferner ausgebildet zum:
- Bestimmen, für die aktuelle Drehzahl des Verdichters, eines maximal zulässigen Hochdrucks, eines minimal zulässigen Hochdrucks, eines maximal zulässigen Niederdrucks und eines minimal zulässigen Niederdrucks;
- Bestimmen von Abständen des aktuellen Hochdrucks zu dem minimal und maximal zulässigen Hochdruck, sowie von Abständen des aktuellen Niederdrucks zu dem maximal und minimal zulässigen Niederdruck;
- Bestimmen der aktuellen Drehzahlbereichsklasse zum Erhalten der zulässigen gegensteuernden Aktionen;
- Bestimmen, je zulässige gegensteuernde Aktion, eines Änderungsfaktors des zu der gegensteuernden Aktion gehörenden Aktors in Abhängigkeit wenigstens eines der bestimmten Abstände;
- Regeln der Kompressionskälteanlage basierend auf den bestimmten Änderungsfaktoren der Aktoren.

Die beiden Ausgangssignale für den Regler, nämlich die Stellsignale der Aktoren sowie die zusätzlichen Änderungsfaktoren, werden auf geeignete Weise kombiniert, so dass die Regelung erfindungsgemäß eben auch basierend auf den bestimmten Änderungsfaktoren erfolgt.

Vorzugsweise weist das Kältemittel einen Temperaturglide auf, wobei das Kältemittel insbesondere R454C aufweist oder daraus besteht, und wobei die Kompressionskälteanlage insbesondere einem internen Wärmeübertrager zur Übertragung von Wärmeenergie des Kältemittels vor Eintritt in das Drosselorgan an das Kältemittel vor Eintritt in den Verdichter enthält. Dies ist insbesondere deshalb einschlägig, da bei Kältekreisen mit R454C leistungsstarke interne Wärmeübertrager zum Einsatz kommen.

Die Aufgabe wird erfindungsgemäß ferner durch eine Wärmepumpe mit einer erfindungsgemäßen Kompressionskälteanlage gelöst.

Die erfindungsgemäße Kompressionskälteanlage eignet sich unabhängig von der Art der Wärmepumpe, beispielsweise Luft-/Wasser-, Sole-/Wasser-Wärmepumpen, und unabhängig von dem Ort der Aufstellung.

Die Figuren zeigen ein Ausführungsbeispiel:
- Fig. 1: Wärmepumpe 100 mit einem Dampfkompressionskreislauf 200

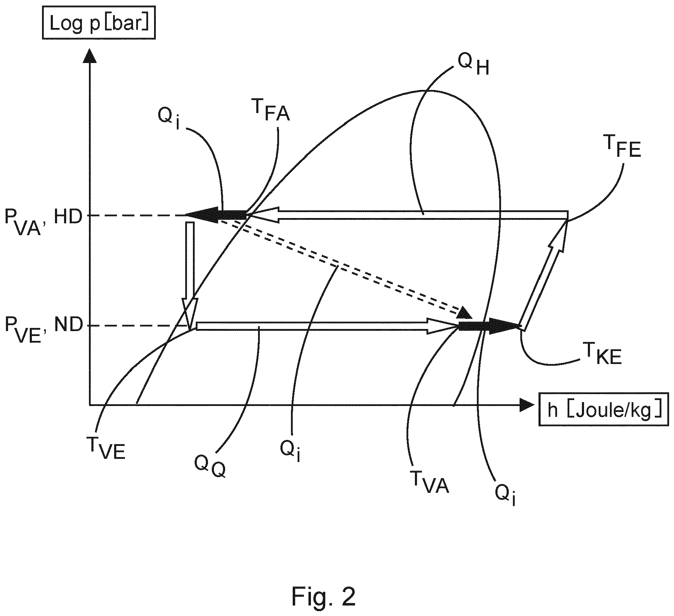

- Fig. 2: log p / h - Diagramm des Dampfkompressionsprozesses mit Rekuperator 250
- Fig. 3: zeigt schematisch und exemplarisch ein Verdichterkennfeld
- Fig. 4: zeigt schematisch und exemplarisch ein Flussdiagramm eines Verfahrens.
- Fig. 5: zeigt einen Verlauf der Reduzierung beispielsweise der Verdichterdrehzahl in Abhängigkeit des Wertes des Niederdruckes.
- Fig. 6: zeigt schematisch und exemplarisch ein Flussdiagramm eines erfindungsgemäßen Verfahrens zum Regeln einer Kompressionskälteanlage.

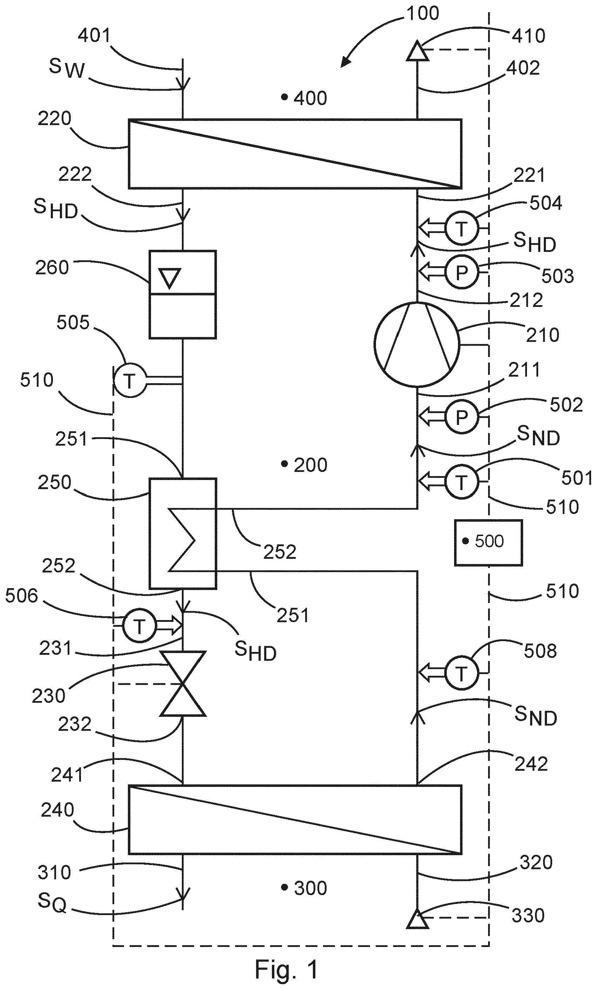

Fig. 1 zeigt schematisch und exemplarisch eine Wärmepumpe 100. Die Wärmepumpe 100 besteht im Wesentlichen aus einem eine Kompressionskälteanlage bildenden Dampfkompressionssystem 200, welches folgende Komponenten enthält:
- Einen Verdichter 210 zum Verdichten des überhitzten Kältemittels,
- einen Verflüssiger 220, mit einem kältemittelseitigem Verflüssigereintritt 221 und einem Verflüssigeraustritt 222 zur Übertragung von Wärmeenergie Q_{H} aus dem Dampfkompressionssystem 200 an ein Heizmedium eines Heizsystems 400, mit einem Heizmediumeintritt 401, einem Heizmediumaustritt 402 und einer Heizmediumpumpe 410, zu einer Gebäudeheizung oder ein System zur Warmwassererhitzung,
- vorteilhaft einen Kältemittelsammler 260, welcher als Kältemittelreservoir zum Ausgleich von betriebsbedingungsabhängig unterschiedlich hohen Kältemittelmengenbedarfen verwendet wird,
- ein als Expansionsventil ausgebildetes Drosselorgan 230 zum Expandieren des Kältemittels,
- einen Verdampfer 240, mit einem Verdampfereinlass 241, zur Übertragung von Quellenenergie Q_{Q} aus einem Wärmequellensystem 300, mit einem Wärmequelleinlass 320 und einem Wärmequellauslass 310, wobei das Wärmequellsystem 300 insbesondere ein Solesystem sein kann, welches Wärmeenergie Q_{Q} aus dem Erdreich aufnimmt oder ein Luftsystem, welches Wärmeenergie Q_{Q} aus der Umgebungsluft aufnimmt und an das Dampfkompressionssystem 200 abgibt oder eine beliebige andere Wärmequelle,
- einen Rekuperator als Beispiel eines optionalen internen Wärmeübertragers 250, welcher dazu bestimmt ist, innere Wärmeenergie Qᵢ zwischen dem vom Verflüssiger 220 zum Expansionsventil 230 strömenden Kältemittel auf das vom Verdampfer 240 zum Verdichter 210 strömende Kältemittel zu übertragen und
- ein Kältemittel, insbesondere ein Kältemittelgemisch aus wenigsten zwei Stoffen oder zwei Kältemitteln welches in einer Strömungsrichtung S_{HD} und S_{ND} durch den Dampfkompressionskreis 200 strömt, wobei im Dampfkompressionskreislauf 200 Kältemitteldampf durch den Verdichter 210 auf einen Hochdruck HD gebracht wird und zu einem Verflüssiger 220 geführt ist, wobei ein Hochdruckpfad mit der Hochdruckströmungsrichtung S_{HD} vom Verdichter 210 bis zum Expansionsventil 230 gebildet ist. Nach dem Expansionsventil 230 bis zum Verdichter 210 ist ein Niederdruckpfad mit einer Niederdruckströmungsrichtung S_{ND} des Kältemittels gebildet, in dem der Verdampfer 240 liegt.

Die folgend aufgelisteten Aktoren sind vorteilhaft zumindest teilweise mit dem Regler über eine Datenverbindung 510, die per Kabel, Funk oder andere Technologien erfolgen kann, verbunden: Verdichter 210, Heizmediumpumpe 410, Solepumpe 330, Expansionsventil 230, Verdichtereintrittstemperatursensor 501, Niederdrucksensor 502, Hochdrucksensor 503 Heißgastemperatursensor 504, Rekuperatoreintrittstemperatursensor 505 Rekuperatoraustrittstemperatursensor 506und/oder Verdampferaustrittstemperatursensor 508. Zusätzlich oder alternativ kann ein in der Fig. 1 nicht gezeigter Verdampfereintrittstemperatursensor die Temperatur am Verdampfereinlass 241 bestimmen.

In dem in Fig. 1 gezeigten Beispiel ist die Wärmepumpe 100 als Sole-Wärmepumpe gezeigt. Natürlich sind analoge Betrachtungen und Vorteile mit Luft-/Wasser-Wärmepumpen erreichbar. Insbesondere bei Luft-Wärmepumpen ist anstelle des Solekreises mit Solepumpe 330 ein Ventilator/Lüfter als Wärmequelle angeordnet.

Der Verdichter 210 dient zur Kompression des überhitzten Kältemittels von einem Eintrittsanschluss 211 auf einen Verdichteraustrittsdruck P_{Va} bei einer Verdichteraustrittstemperatur entsprechend der Heißgastemperatur am Verdichteraustritt 212. Der Verdichter 210 enthält üblicher Weise eine Antriebseinheit mit einem Elektromotor, eine Kompressionseinheit und vorteilhaft kann der Elektromotor drehzahlvariabel betrieben werden. Die Kompressionseinheit kann als Rollkolbeneinheit, Scrolleinheit oder anders ausgeführt sein. Am Verdichteraustritt 212 ist das komprimierte überhitzte Kältemittel beim Verdichteraustrittsdruck P_{Va} auf einer höheren Drucklage, insbesondere einem Hochdruck HD, als am Eintrittsanschluss 211 mit einem Verdichtereintrittsdruck P_{Ve,} insbesondere einem Niederdruck ND, bei einer Verdichteter Eintrittstemperatur T_{VE}, was den Zustand der Kältemitteltemperatur am Eintrittsanschluss 211 bei Eintritt in eine Kompressionskammer beschreibt.

Im Verflüssiger 220 erfolgt die Übertragung von Wärmeenergie Q_{H} vom Kältemittel des Dampfkompressionssystem 200 an ein Heizmedium des Wärmesenkensystems 400. Zunächst findet im Verflüssigter 220 die Enthitzung des Kältemittels statt, wobei überhitzter Kältemitteldampf durch eine Temperaturreduzierung einen Teil seiner Wärmeenergie an das Heizmedium des Wärmesenkensystems 400 überträgt.

Nach der Enthitzung des Kältemitteldampfes erfolgt vorteilhaft im Verflüssiger 220 eine weitere Wärmeübertragung Q_{H} durch Kondensation des Kältemittels beim Phasenübergang von der Gasphase des Kältemittels auf die Flüssigphase des Kältemittels. Dabei wird weitere Wärme Q_{H} vom Kältemittel aus dem Dampfkompressionssystem 200 an das Heizmedium des Wärmesenkensystems 400 übertragen.

Der sich im Verflüssiger 220 einstellende Hochdruck HD des Kältemittels korrespondiert im Betrieb des Verdichters 210 in etwa mit einem Kondensationsdruck des Kältemittels bei einer Heizmediumtemperatur T_{WS} im Wärmesenkensystem.

Das Heizmedium, insbesondere Wasser, wird mittels einer Heizmediumpumpe 410 durch das Wärmesenkensystem 400 in einer Richtung SW durch den Verflüssiger 220 gefördert, dabei wird die Wärmeenergie Q_{H} vom Kältemittel auf das Heizmedium übertragen.

Im nachfolgenden Sammler 260 wird aus dem Verflüssiger 220 austretendes Kältemittel gespeichert, welches abhängig vom Betriebspunkt des Dampfkompressionskreises 200 nicht in das zirkulierende Kältemittel eingespeist werden soll. Wird aus dem Verflüssiger 220 mehr Kältemittel eingespeist, als durch das Expansionsventil 230 weitergeleitet wird, füllt sich der Sammler 260, anderenfalls wird er leerer oder entleert.

Im nachfolgenden Rekuperator 250, der auch als interner Wärmeübertrager bezeichnet werden kann, wird interne Wärmeenergie Qᵢ vom unter dem Hochdruck HD stehenden Kältemittel, welches vom Verflüssiger 220 zum Expansionsventil 230 in einer Hochdruck-Strömungsrichtung S_{HD} strömt, auf das unter dem Niederdruck ND strömende Kältemittel übertragen, welches vom Verdampfer zum Verdichter in einer Niederdruckströmungsrichtung S_{ND} strömt, übertragen. Dabei wird das vom Verflüssiger zum Expansionsventil 230 strömende Kältemittel in vorteilhafter Weise unterkühlt.

Zunächst strömt das Kältemittel durch einen Expansionsventileintritt 231 in das Expansionsventil ein. Im Expansionsventil 230 erfolgt eine Drosselung des Kältemitteldruckes vom Hochdruck HD auf den Niederdruck ND, indem das Kältemittel vorteilhaft eine Düsenanordnung oder Drossel mit einem vorteilhaft variablem Öffnungsquerschnitt passiert, wobei der Niederdruck vorteilhaft in etwa ein Saugdruck des Verdichters 210 entspricht. Anstelle eines Expansionsventils 230 kann auch eine andere beliebige Druckminderungseinrichtung eingesetzt sein. Vorteilhaft sind Druckminderungsrohre, Turbinen oder andere Entspannungsvorrichtungen.

Ein Öffnungsgrad des Expansionsventils 230 wird durch einen Elektromotor, der üblicherweise als Schrittmotor ausgeführt ist eingestellt, welcher durch die Steuereinheit oder Regelung 500 gesteuert wird. Dabei wird der Niederdruck ND beim Expansionsventilaustritt 232 des Kältemittels aus dem Expansionsventil 230 so gesteuert, dass der sich einstellende Niederdruck ND des Kältemittels im Betrieb des Verdichters 210 in etwa mit dem Verdampfungsdruck des Kältemittels mit der Wärmequellenmedientemperatur T_{WQ} korrespondiert. Vorteilhaft wird die Verdampfungstemperatur des Kältemittels wenige Kelvin unterhalb der Wärmequellenmedientemperatur T_{WQ} liegen, damit die Temperaturdifferenz eine Wärmeübertragung treibt.

Im Verdampfer erfolgt eine Übertragung von Verdampfungswärmeenergie Qv vom Wärmequellenfluid des Wärmequellensystems 300, welches ein Solesystem, ein Erdwärmesystem zur Nutzung von Wärmeenergie Q_{Q} aus dem Erdreich, ein Luftsystem zur Nutzung von Energie Q_{Q} aus der Umgebungsluft oder eine andere Wärmequelle sein, die die Quellenergie Q_{Q} an das Dampfkompressionssystem 200 abgibt.

Das in den Verdampfer 240 einströmende Kältemittel reduziert beim Durchströmen des Verdampfers 240 durch Wärmeaufnahme Q_{Q} seinen Nassdampfanteil und verlässt den Verdampfer 240 vorteilhaft mit einem geringen Nassdampfanteil oder vorteilhaft auch als überhitztes gasförmiges Kältemittel. Das Wärmequellenmedium wird mittels einer Solepumpe 330 bei Sole - Wasser-Wärmepumpen oder einem Außenluftventilator bei Luft/Wasser-Wärmepumpen durch den Wärmequellenmedienpfad des Verdampfers 240 gefördert, wobei beim Durchströmen des Verdampfers dem Wärmequellenmedium die Wärmeenergie Q_{Q} entzogen wird.

Im Rekuperator 250 wird Wärmeenergie Qᵢ zwischen dem vom Verflüssiger 220 zum Expansionsventil 230 strömenden Kältemittel auf das vom Verdampfer 240 zum Verdichter 210 strömende Kältemittel übertragen, wobei das vom Verdampfer 240 zum Verdichter 210 strömende Kältemittel insbesondere weiter überhitzt.

Dieses überhitzte Kältemittel, welches mit einer Überhitzungstemperatur T_{Ke} aus dem Rekuperator 250 austritt, wird zum Kältemitteleintrittsanschluss 211 des Verdichters 210 geleitet.

Der Rekuperator 250 ist im Dampfkompressionskreis 200 eingesetzt, um den Gesamt - Wirkungsgrad als Quotient aus abgegebener Heizleistung Q_{H} und aufgenommener elektrischer Leistung Pₑ zum Antrieb des Verdichtermotors zu erhöhen.

Zu diesem Zweck wird dem Kältemittel, welches im Verflüssiger 220 Wärmeenergie Q_{H} auf einem wärmesenkenseitigen Temperaturniveau an das Heizmedium abgibt, im Hochdruckpfad des Rekuperators 250 durch Unterkühlung weitere Wärmeenergie Qᵢ entzogen.

Der innere Energiezustand des Kältemittels beim Eintritt in den Verdampfer 240 ist durch diesen Wärmeentzug Qᵢ reduziert, sodass das Kältemittel bei gleichem Verdampfungstemperaturniveau mehr Wärmeenergie Q_{Q} aus der Wärmequelle 300 aufnehmen kann.

Anschließend wird dem Kältemittel, nach dem Verdampferaustritt 242 aus dem Verdampfer 240, im Niederdruckpfad bei Niederdruck ND und bei einer Niederdrucktemperatur entsprechend einer Verdampferaustrittstemperatur T_{Va} im Rekuperator 250 die im Hochdruckpfad entzogene Wärmeenergie Qᵢ wieder zugeführt. Die Zuführung der Energie bewirkt vorteilhat eine Reduzierung des Nassdampfanteils auf einen Zustand ohne Nassdampfanteil und dann erfolgt durch weitere Energiezuführung eine Überhitzung.

Des Weiteren sind zur Erfassung des Betriebszustandes des Dampfkompressionssystems 200 vorteilhaft folgende Sensoren angeordnet, mit denen insbesondere zur Absicherung und Optimierung der Betriebsbedingungen des Dampfkompressionssystems 200 insbesondere bei Betriebszustandsänderungen eine modellbasierte Vorsteuerung umgesetzt ist.

Einerseits erfolgt vorteilhaft mit Hilfe der durch Sensoren erfassten Prozesswerte eine Absicherungen bezüglich zulässiger Arbeitsbereiche der Komponenten wie insbesondere dem Verdichter 210, andererseits erfolgen basierend auf den Sensordaten modellbasierte Vorsteuerungen insbesondere einer Drehzahl des Verdichters 210 und/oder einem Ventilöffnungsgrad des Expansionsventils, so dass die Regler zur Ausregelung einer sich dennoch, durch die Vorsteuerung aber kleineren, Regelabweichung nur noch kleinere Korrekturen durchführen muss:
- Ein Hochdrucksensor 503 vorteilhaft zur Erfassung des Hochdrucks HD des Kältemittels am Verdichteraustritt 212 oder zwischen dem Verdichteraustritt 212 und dem Expansionsventileintritt 231,
- ein Heißgastemperatursensor 504 vorteilhaft zur Erfassung einer Heißgastemperatur T_{HG} des Kältemittels am Verdichteraustritt 212, oder im Kältekreisabschnitt zwischen dem Verdichteraustritt 212 und dem Verflüssigereintritt 221,
- ein Innentemperatursensor 506 vorteilhaft zur Erfassung der Innentemperatur T_{Ie} des Kältemittels zwischen dem hochdruckseitigem internen Rekuperatorauslass 252 des Kältemittels aus dem Rekuperator 250 und dem Expansionsventileitritt 231. Die Innentemperatur ist vorteilhaft auch als "Rekuperatoraustrittstemperatur Hochdruckpfad" benannt und
- vorteilhaft ein Rekuperatorinnentemperatursensor 505. Der Rekuperatorinnentemperatursensor 505 erfasst vorteilhaft Verflüssigeraustrittstemperatur T_{FA} des Kältemittel in der Strömungsrichtung am Verflüssigeraustritt oder dem hochdruckseitigen Rekuperatoreintritt und daher wird vorteilhaft die Verflüssigeraustrittstemperatur T_{FA} vom Rekuperatorinnentemperatursensor 505 gemessen.

Die folgenden Sensoren sind insbesondere für die Durchführung des erfindungsgemäßen Verfahrens vorteilhaft:
- Ein Niederdrucksensor 502 zur Erfassung des Niederdrucks ND des Kältemittels am Verdichtereintritt 211, oder zwischen dem Expansionsventil 230 und dem Verdichtereintritt 211,
- ein Verdampferaustrittstemperatursensor 508 zur Erfassung der Verdampferaustrittstemperatur T_{Va} des Kältemittels am Verdampferaustritt 242 oder zwischen dem Verdampferaustritt 242 und dem niederdruckseitigen Eintritt des Kältemittels in den Rekuperatoreinlass 251 des Rekuperators 250 und
- ein Niederdrucktemperatursensor 501 misst vorteilhaft eine Verdichtereintrittstemperatur oder dient vorteilhaft zur Erfassung der Kältemittelniederdrucktemperatur T_{ND} oder vorteilhaft einer Verdichtereintrittstemperatur T_{KE} am Verdichtereintritt 211, oder zwischen dem niederdruckseitigem Rekuperatorauslass 252 des Kältemittels aus dem Rekuperator 250 und dem Verdichtereintritt 211.

Die Prozessgröße, welche einen maßgeblichen Einfluss auf den Gesamt - Wirkungsgrad des Dampfkompressionskreises 200 als Quotient zwischen der vom Dampfkompressionskreis 200 übertragenen Heizleistung Q_{H} zu einer vom Verdichter 210 aufgenommenen elektrischen Leistung Pₑ hat, ist die Überhitzung des Kältemittels am Verdichtereintritt 211. Zur Einhaltung zulässiger Verdichter - Betriebsbedingungen werden vorteilhaft allerdings Beschränkungen bezüglich des erlaubten Überhitzungsbereiches des Kältemittels am Verdichtereintritt eingehalten. Zu niedrige Überhitzungen gefährden insbesondere die Schmiereigenschaften des Maschinenöls, zu hohe Überhitzungen bewirken insbesondere eine zu hohe Heißgastemperatur.

Die Überhitzung beschreibt die Temperaturdifferenz zwischen der erfassten Verdichtereintrittstemperatur T_{KE} des Kältemittels und der Verdampfungstemperatur des Kältemittels bei gesättigtem Dampf.

Vorzugsweise wird die Verdichtereintrittsüberhitzung derart geregelt, dass kein Kondensat durch Taupunktunterschreitung des in der Umge-5 bungsluft enthaltenden Wasserdampfanteils an Komponenten des Kältekreises insbesondere im Abschnitt zwischen Kältemittelaustritt des Rekuperators 252 und Verdichtereintritt 211 ausfällt. Der Kältekreisabschnitt zwischen Verdampferaustritt 242 und Rekuperatoreintritt 251 ist zwar üblicherweise kälter, weil dieser typischerweise nur ein kurzer Rohrabschnitt ist, ist eine bessere Isolierung im Vergleich zu dem Abschnitt zwischen Kältemittelaustritt des Rekuperators 252 und Verdichtereintritt 211 möglich. Beispielsweise sitzt an der Stelle des Verdichtereintritts 211 am Verdichter der Kältemittelabscheider, der geschützt werden soll. Dieser kann schlecht eingehaust werden, so dass hier die Temperatur so hoch gehalten werden soll, dass nichts kondensiert. Die Problematik der Kondensation tritt auf der Hochdruckseite im Regelfall nicht auf. Auch die Passage zwischen hochdruckseitigem Rekuperatoraustritt 252 und Eintritt in das Expansionsventil 231 kühlt regelmäßig in Abhängigkeit des Betriebspunktes bei idealen Wärmeübertragungsbedingungen im Rekuperator 250 auf das Temperaturniveau des Kältemittels am Verdampferaustritt 242 ab. Da aber auch diese Passage typischerweise kurz ist und man kann sie sehr gut isolieren kann, ist auch dieser Abschnitt im Regelfall nicht problematisch. Es sollte jedoch beachtet werden, dass das Verfahren einen Kondensatabfall grundsätzlich über den gesamten Kreislauf der Wärmepumpe verhindern kann.

Wenn - zum Zwecke eines Zahlenbeispiels - ein Verdampfungstemperaturniveau von ca. -10°C angenommen wird und die Temperatur am Soleeintritt 330 bei etwa -10°C, am Soleaustritt 310 etwa -13°C und am Verdichtereintritt 5°C beträgt, beträft die Überhitzung 15K.

Vorteilhaft sind bei vielen Anlagen Raumtemperatursensor und Raumfeuchtesensor, die eine genaue Bestimmung der Auskondensierungsbedingungen der Luft ermöglicht, bspw. liegt bei 21°C und 60 % rel. Feuchte die Kondensationstemperatur im Bereich von 13°C. Unter diesen Bedingungen findet also, so lange die Rohrtemperatur über 13°C zuzüglich gegebenenfalls einen Puffer, bspw. 1K, keine Kondensation statt.

An dem selbstverständlich nicht einschränkenden Zahlenbeispiel festgehalten wird nun die Erzielung einer Überhitzung von 15 K bei einer Verdichtereintrittstemperatur von 5°C erreicht. Diese Temperatur liegt unter den 13°C, die für die aktuellen Umgebungsbedingungen als Kondensationstemperatur des in der Umgebungsluft befindlichen Wasserdampfanteils bestimmt ist. Demnach findet Kondensation statt. Soll die Verdichtereintrittstemperatur wenigstens 14°C, d.h. Kondensationstemperatur plus Puffer, betragen, muss die Überhitzung um 9 K größer werden, d.h. eine Überhitzung von 24 K eingehalten werden.

Grenzwerte, insbesondere für die Überhitzung, legen arbeitspunktabhängig den zulässigen Überhitzungsbereich der Komponenten am Verdichtereintritt 211 fest. Weiterhin bestehen aber auch Abhängigkeiten zwischen der Verdichtereintrittsüberhitzung dT_{ÜE} und dem Gesamtwirkungsgrad des Dampfkompressionskreises 200 oder auch zwischen Verdichtereintrittsüberhitzung dT_{ÜE} und einer Stabilität S eines Regelwertes R vorteilhaft bei der Ausregelung der Verdichtereintrittsüberhitzung.

Zur Berücksichtigung all dieser Anforderungen werden vorteilhaft in Abhängigkeit des Arbeitspunktes des Dampfkompressionskreises 200, die Wärmequellenmedientemperatur, die Heizmediumtemperatur, die Verdichterleistung Pₑ und Zielwerte Z oder der Zielwert Z für eine Berechnung der Verdichtereintrittsüberhitzung dT_{ÜE} herangezogen. Alternativ oder zusätzlich kann aus den vom Arbeitspunkt abhängigen Kältekreis-Messgrößen wie Wärmequellenmedientemperatur, Heizmediumtemperatur, Verdichterleistung Pₑ und parametrierbaren, also an das Verhalten der jeweiligen Kältekreiskomponenten angepasste Koeffizienten eine Berechnung des Zielwertes Z als Vorgabewert für die Verdichtereintrittsüberhitzung dT_{ÜE} durchgeführt werden. Im einfachsten Fall ist der Zielwert für die Verdichtereintrittsüberhitzung dT_{ÜE} unabhängig von allen Betriebsbedingungen konstant, z.B. 10 Kelvin. Bei einer komplexeren Anpassung wird er als Funktion einer Arbeitspunktgröße, z.B. der Verdichterleistung Pₑ variiert oder bei noch komplexerer Anpassung variiert er als Funktion mehrerer Arbeitspunktgrößen.

Es wird eine Regelabweichung der Verdichtereintrittsüberhitzung dT_{ÜE} und eine Regelabweichung der Verdampferaustrittsüberhitzung dT_{ÜA} miteinander gewichtet kombiniert, woraus im Regler 500 eine Gesamtregelabweichung berechnet wird, welche zur Regelung des Dampfkompressionskreises 200 eingespeist wird. Vorteilhaft präziser werden zunächst die Regelabweichungen von der Verdichtereintrittsüberhitzung dT_{ÜE} und Verdampferaustrittsüberhitzung dT_{ÜA} durch die Bildung der Differenzen zwischen den jeweiligen Messwerten und Zielwerten gebildet.
- Regelabweichung der Verdichtereintrittsüberhitzung dT_{ÜE} = Messwert Verdichtereintrittsüberhitzung - Zielwert Verdichtereintrittsüberhitzung Z_{TÜE}
- Regelabweichung der Verdampferaustrittsüberhitzung dT_{ÜA} = Messwert Verdampferaustrittsüberhitzung - Zielwert Verdampferaustrittsüberhitzung Z_{TÜA}

Dann wird vorteilhaft aus dem gewichteten Einfluss von der Regelabweichung der Verdichtereintrittsüberhitzung dT_{ÜE} und dem gewichteten Einfluss der Regelabweichung der Verdampferaustrittsüberhitzung dT_{ÜA} im Regler 500 die Gesamtregelabweichung berechnet, welche zur Regelung des Dampfkompressionskreises 200 eingespeist wird.

Beim Dampfkompressionskreis 200 passiert das Kältemittel nach der Entspannung durch das Expansionsventil 230 zwei sequentiell angeordnete Wärmeübertrager, den Verdampfer 240 und den Rekuperator 250 in welchen dem Kältemittel Wärmeenergie Q_{Q} und Qᵢ zugeführt wird.

Im Verdampfer 250 wird dem Kältemittel Quellwärmeenergie Q_{Q} aus dem Wärmequellsystem 300 zugeführt. Das Temperaturniveau der zugeführten Quellwärme Q_{Q} ist auf einem Temperaturniveau der Wärmequelle, insbesondere wie des Erdreiches oder der Außenluft.

In dem in Kältemittel Hochdruck-Strömungsrichtung S_{HD} nachfolgenden Rekuperator 250 wird dem Kältemittel Wärmeenergie Qᵢ nach Verlassen des Verflüssigers 220 entzogen. Das Temperaturniveau des Kältemittels am Austritt des Verflüssigers stellt sich in etwa auf Höhe der Rücklauftemperatur des Heizmediums ein.

Diese Verschaltung des Verdampfers 240 mit dem Rekuperator 250 in Reihe hat einen entscheidenden Einfluss auf die Übertragungsfunktion der Regelstrecke für die Regelung Verdichtereintrittsüberhitzung dT_{ÜE}.

Der Regelwert R ist vorteilhaft die gewichtete Verknüpfung der Regelabweichung der Verdichtereintrittsüberhitzung dT_{ÜE} mit der Regelabweichung der Verdampferaustrittsüberhitzung.

Aktor-Betriebszustandsgrößen mit einem Einfluss auf den Regelwert R, insbesondere der Verdichtereintrittsüberhitzung dT_{ÜE}, sind im betreffenden Dampfkompressionskreis 200 die Verdichterdrehzahl und/oder den Öffnungsgrad des Expansionsventils 230, womit auch vorteilhaft der Niederdruck ND und das Verdampfungstemperaturniveau bestimmt sind.

Besonders vorteilhaft haben Aktoren Einfluss auf den Regelwert R, insbesondere auf die gewichtete Verknüpfung der Regelabweichung der Verdichtereintrittsüberhitzung mit der Regelabweichung der Verdampferaustrittsüberhitzung. Im betreffenden Dampfkompressionskreis 200 sind insbesondere der Verdichter 210 durch die Variation der Verdichterdrehzahl und das Expansionsventil 230 durch Beeinflussung des Öffnungsgrades solche Aktoren. Diese beiden Aktoren beeinflussen den Niederdruck ND und das Verdampfungstemperaturniveau.

Hierbei sind nicht alle Einflüsse gewünscht. So verändert beispielsweise eine Änderung der Verdichterdrehzahl zur Einregelung der gewünschten Heizleistung ohne weitere kompensatorische Änderungen des Öffnungsgrades des Expansionsventils den Regelwert R in unerwünschte Bereiche, sodass eine mit der Verdichterdrehzahländerung einhergehende modellbasiert unterstützte Öffnungsgradänderung des Expansionsventils zur Einregelung von R vorteilhaft, gegebenenfalls sogar erforderlich ist.

Vorteilhaft wird im Dampfkompressionskreis 200 die Verdichterdrehzahl so eingestellt, dass die vom Dampfkompressionskreis 200 an das Heizmedium übertragene Heizleistung QH dem angeforderten Zielwert Z entspricht. Zur Einhaltung dieser Vorgabe ist eine Beeinflussung der Verdichterdrehzahl zur Regelung der Verdichtereintrittsüberhitzung dT_{ÜE} vorteilhaft untergeordnet oder nicht angebracht.

Vorteilhaft wird der Öffnungsgrad des Expansionsventils 230 als Stellwert für die Regelung der Verdichtereintrittsüberhitzung dT_{ÜE} verwendet. Der Einfluss des Öffnungsgrades des Expansionsventils 230 auf die Verdichtereintrittsüberhitzung dT_{ÜE} vollzieht sich wie folgt:
Das Expansionsventil 230 agiert als Düse mit elektromotorisch verstellbarem Düsenquerschnitt, bei welchem üblicherweise mittels eines Schrittmotor eine nadelförmige Düsennadel per Gewinde in einen Düsensitz gefahren wird.

Der Kältemitteldurchsatz durch das Expansionsventil ist bei Betrieb mit flüssigem Kältemittel am Expansionsventileintritt 231 in etwa proportional zur Quadratwurzel des Druckunterschiedes zwischen dem Expansionsventileintritt 231 und -austritt 232 multipliziert mit einem aktuellen relativen Wert des Düsenquerschnitts oder Öffnungsgrads und vorteilhaft einer vom Kältemittel - und einer Geometrie des Expansionsventils 230 abhängigen Konstante.

Da bei einer in einem Arbeitspunkt mit einer als konstant angenommenen Verdichterdrehzahl und einer als konstant angenommenen Heizmediumtemperatur Tws auch der korrespondierende Hochdruck HD des Kältemittels beim Eintritt in das Expansionsventil 230 als konstant angenommen werden kann, beeinflusst der Öffnungsgrad des Expansionsventil 230 maßgeblich nur den Niederdruck ND, also des Austrittsdruck aus dem Expansionsventil 230.

Wird der Öffnungsgrad des Expansionsventils 230 verringert, so passiert weniger Kältemittel bei konstantem Hochdruck HD und zunächst noch konstantem Niederdruck ND das Expansionsventil 230. Da der Verdichter 210 aber weiterhin zunächst den gleichen Kältemittelmassenstrom fördert, wird in Hochdruck-Strömungsrichtung S_{HD} durch das Expansionsventil 230 weniger Kältemittel zugeführt, als vom Verdichter 210 abgesaugt wird.

Da es sich bei Kältemitteldampf um ein kompressibles Medium handelt, sinkt dann der Niederdruck ND auf der Niederdruckseite des Dampfkompressionskreises 200. Bei sinkendem Niederdruck ND sinkt in etwa proportional der Massenstrom von Kältemittel durch den Verdichter 210, da dessen Förderleistung sich angenähert als Rauminhalt / Zeit beschreiben lässt, bedingt durch insbesondere die Kolbenhübe, und es stellt sich ein entsprechend reduzierter Niederdruckwert ND ein, bei welchem der durch das Expansionsventil 230 zugeführte Kältemittelmassenstrom gleich dem vom Verdichter 210 abgeführten Kältemittelmassenstrom ist.

Wird der Öffnungsgrad des Expansionsventils 230 vergrößert, so passiert mehr Kältemittel bei konstantem Hochdruck HD und zunächst noch konstantem Niederdruck ND das Expansionsventil 230. Da der Verdichter 210 aber weiterhin zunächst den gleichen Kältemittelmassenstrom fördert, wird der Niederdruckseite ND des Kältekreises durch das Expansionsventil 230 mehr Kältemittel zugeführt, als vom Verdichter 210 abgesaugt wird. Da es sich beim Kältemitteldampf um ein kompressibles Medium handelt, steigt der Niederdruck ND auf der Niederdruckseite des Dampfkompressionskreises 200. Bei steigendem Niederdruck ND steigt die Massenstromförderleistung des Verdichters 210 in etwa proportional, da dessen Förderleistung sich angenähert als Rauminhalt / Zeit beschreiben lässt, und es stellt sich ein entsprechend erhöhter Niederdruck ND ein, bei welchem der durch das Expansionsventil 230 zugeführte Kältemittelmassenstrom gleich dem vom Verdichter 210 abgeführte Kältemittelmassenstrom ist.

Der Niederdruck ND wiederum beeinflusst maßgeblich die Wärmeübertragung zwischen Wärmequellenmedium und Kältemittel im Verdampfer 240. Der Wärmestrom Q_{Q} aus dem Wärmequellsystem 300 wird zwischen dem Wärmequellmedium und dem Kältemittel mit unterschiedlicher Temperatur übertragen, wobei der Wärmestrom Q_{Q} dabei abhängig vom der Temperaturdifferenz zwischen dem Wärmequellmedium und dem Kältemittel und dem Wärmeübergangswiderstand einer Wärmeübertragungsschicht des Verdampfers 240 ist.

Der Wärmeübergangswiderstand zwischen Wärmequellenmedienpfad des Verdampfers und Kältemittelpfad des Verdampfers ist in einem jeweiligen Dampfkompressionskreis 200 als in etwa konstant anzunehmen. Daher ist die Größe der Wärmeübertragungsleistung im Verdampfer 240 maßgeblich abhängig vom Integral der Temperaturdifferenzen aller Flächenelemente der Wärmeübertragungsschicht.

Um ein hinreichendes Maß von Wärmeenergie Q_{Q} vom Wärmequellesystem 300 an das Kältemittel übertragen zu können, muss sichergestellt sein, dass die Temperatur des Wärmequellenmediums in möglichst allen Flächenelementen der Übertragungsschicht des Wärmeübertragers, hier des Verdampfers 240, größer ist als die Temperatur des Kältemittels am jeweiligen Flächenelement ist.

Ist der Aggregatzustand des Kältemittels beim Durchströmen des Verdampfers 240 gesättigter Dampf, so stellt sich eine Kältemitteltemperatur ein, welche durch die Sättigungsdampfkennlinie als Stoffeigenschaft des Kältemittels eine Funktion des Niederdrucks ND des Kältemittels ist. Somit lässt sich durch eine Steuerung des Niederdruckes ND oder auch eines Verdampfungsdruckes indirekt eine Steuerung der Verdampfungstemperatur des Kältemittels beim Durchströmen des Rekuperators 250 steuern.

Die Wärmeenergie Q_{Q}, welche vom Wärmequellensystem an das den Verdampfer 240 durchströmende Kältemittel übertragen wird, bewirkt eine Aggregatzustandsbeeinflussung des Kältemittels.

Der Nassdampfanteil im gesättigten Kältemitteldampf nimmt bei konstantem Niederdruck bei Wärmeübertragung an das Kältemittel ab. Bei einer unvollständigen Verdampfung ist der Nassdampfanteil und damit auch der innere Energiezustand des Kältemittels beim Austritt aus dem Wärmeübertrager eine Funktion vom:
- Nassdampfanteil bei Eintritt in den Verdampfer 240,
- Kältemittelmassenstrom,
- Übertragener Wärmeleistung Q_{Q}, und von einer
- Enthalpiedifferenz im Nassdampfgebiet beim jeweiligen Niederdruck ND, welche das Kältemittel als Stoffkonstante als Funktion des Drucks aufweist.

Zur vollständigen Verdampfung erfolgt eine zusätzliche Energiezuführung im Rekuperator 250, um das Kältemittel über den Zustand gesättigten Dampfes hinaus zu überhitzen.

Mit dem Verfahren wird bei gegebenen Betriebsbedingungen des Dampfkompressionskreises 200 in Abhängigkeit der Stellgröße "Öffnungsgrad Expansionsventil 230" ein korrespondierender Kältemittelzustand beim Austritt aus dem Verdampfers 240 eingestellt.

Im eingeschwungenen Zustand ergibt sich hinsichtlich einer Regeltreckensteilheit der "isolierten" Regelstrecke "Verdampfer 240" ein Regelstreckenverhalten mit moderater Steilheit. Das Regelstreckenverhalten ist insbesondere gekennzeichnet durch Regelstreckenausgangswertes Verdampferaustrittsüberhitzung als Funktion des Regelstreckeneingangswertes Expansionsventilöffnungsgrad.

Vorteilhaft wird ein Kältemittel, insbesondere als Kältemittel ein Kältemittelgemisch verwendet, welches einen "Temperaturglide" aufweist, insbesondere wird vorteilhaft R454C verwendet. Vorteilhaft wird bei einem Kältemittelgemisch mit einem Temperaturglide, sich bei einer relativen Öffnungsgradänderung des Stellorgans Expansionsventil von 1 % rel. am Austritt des Kältemittels aus dem Verdampfer üblicherweise eine Überhitzungsänderung von etwa kleiner 1 K eingestellt.

Die Einstellung dieses Zustandes erfolgt vorteilhaft auch durch eine regelungstechnische Beeinflussung wenigstens einer oder mehrerer der verschiedenen folgenden Zeitkonstanten; die letztendlich die Prozessgröße Kältemittelüberhitzung am Verdampferaustritt 242 beeinflussen:
- Eine erste Zeitkonstante bewirkt vorteilhaft eine Verzögerung der mechanischen Öffnungsgradänderung des Expansionsventils 230 durch die Begrenzung der Verfahrgeschwindigkeit durch den Regler 500, der Regelwert R wird in dieser ersten Zeitkonstante Z in der Verfahrgeschwindigkeit durch einen Bremswert reduziert. Der Bremswert kann beispielsweise die reglertechnische Zykluszeit, in welcher ein Verfahrschritt des Expansionsventils 230 gesteuert wird, umfassen.
- Eine zweite Zeitkonstante wirkt durch den Regler 500 vorgegeben vorteilhaft auf eine verzögerte Einstellung eines korrespondierenden Niederdruckes bei Öffnungsgradänderungen des Expansionsventils 230 aufgrund der Kompressibilität des Kältemitteldampfes bei Niederdruck ND im Niederdruckpfad.
- Eine dritte Zeitkonstante ist vorteilhaft eine thermische Zeitkonstante der Wärmeübertragungsschicht des Verdampfers 240, wobei eine Änderung des Verdampfungsdruckes und damit der Verdampfungstemperatur eine verzögerte Temperaturänderung der Wärmeübertragungsschicht des Verdampfers, welcher oft mehrere Kilogramm Metall hat und des Wärmequellenmediums.
- Eine vierte Zeitkonstante ergibt sich vorteilhaft aus verzögerten Aggregatzustandsänderungen des Kältemittels bei Verdampfungstemperaturänderungen.
- Eine fünfte Zeitkonstante ergibt sich vorteilhaft aus dem Transport des Kältemittels durch den Verdampfer 240 mit einer endlichen Strömungsgeschwindigkeit.

Es stellt sich also vorteilhaft nach Änderung der Stellgröße "Öffnungsgrad des Expansionsventils 230" eine Verzögerung der korrespondierenden Kältemittelzustandsänderung beim Austritt aus dem Verdampferaustritt 242 ein und eine Gesamtzeitkonstante Z_{ges} liegt arbeitspunktabhängig vorteilhaft im Bereich von 30 Sekunden bis etwa 5 Minuten.

Nach Durchströmung des Verdampfers 240 tritt das Kältemittel bei Niederdruck ND in den Niederdruckpfad des Rekuperators 250 ein.

Der Aggregatzustand des Kältemittels beim Einströmen in den Rekuperators 250 ist in einem üblichen Betriebsfall, also vorteilhaft entweder gesättigter Dampf mit einem geringem Dampfanteil zwischen 0 bis 20 % oder insbesondere auch vorteilhaft auch bereits überhitztes Kältemittel.

Bei vorteilhaft gesättigtem Dampf stellt sich eine Kältemitteltemperatur ein, welche durch die Sättigungsdampfkennlinie des Kältemittels eine Funktion des Kältemitteldruckes ist. Bei Eintritt von überhitztem Kältemittel wird die Kältemitteltemperatur maximal eine Größe annehmen, welche der Eintrittstemperatur des Wärmequellenmediums entspricht. In diesem Fall entspricht die Größe vorzugsweise der Eintrittstemperatur des Kältemittels in den Hochdruckpfad des Rekuperators 250, also die Temperatur des Kältemittels nach Austritt aus dem Verflüssiger 220.

Um ein hinreichendes Maß von Wärmeenergie vom Kältemittel des hochdruckseitigen Kältemittelpfad an das Kältemittel des niederdruckseitigen Kältemittelpfad im Rekuperator 250 übertragen zu können, muss sichergestellt sein, dass die Temperatur des Kältemittels des hochdruckseitigen Kältemittelpfads auf Hochdruck HD in möglichst allen Flächenelementen der Übertragungsschicht des Rekuperators 250 größer als die Temperatur des Kältemittels des niederdruckseitigen Kältemittelpfades bei Niederdruck ND am jeweiligen Flächenelement ist.

Die korrespondierenden Temperaturen des Heizsystems 400 des Dampfkompressionssystems 200 sind in einem Heizfall höher als die korrespondierenden Temperaturen der Wärmequelle wie dem Erdreich oder der Außenluft.

Die Wärmeenergie Qᵢ, welche vom Kältemittel bei Hochdruck HD des hochdruckseitigen Kältemittelpfads an das Kältemittel bei Niederdruck im niederdruckseitigen Kältemittelpfad des Rekuperators 250 übertragen wird, bewirkt eine Aggregatzustandsbeeinflussung des Kältemittels auf der Niederdruckseite. Der Nassdampfanteil des den Rekuperator 250 niederdruckseitig bei Niederdruck ND durchströmenden Kältemittels nimmt bei einer Wärmeübertragung an das Kältemittel ab und nach einer vollständigen Verdampfung erfolgt vorteilhaft eine Überhitzung des Kältemittels.

Der innere Energiezustand des Kältemittels, beim Austritt aus dem niederdruckseitigen Pfad des Rekuperators, wird vorteilhaft abhängig von einem oder mehreren der folgenden Faktoren beeinflusst. Hierbei sollte beachtet werden, dass die Energiezustandsänderung ausschließlich auf physikalischen Abhängigkeiten beruht, wobei der Regler die Steuerung der Aktoren beeinflusst, was dann natürlich auch die physikalischen Größen wie den Kältemittelmassenstrom beeinflusst:
- Nassdampfanteil bei Eintritt in den Rekuperator 250,
- Kältemittelmassenstrom,
- übertragene Wärmeleistung Qᵢ, womit vorteilhaft abhängig von der Temperaturdifferenz zwischen der Temperatur des Kältemittels bei Hochdruck HD im hochdruckseitigen Kältemittelpfad und der Temperatur des Kältemittels des niederdruckseitigen Kältemittelpfades bei Niederdruck ND geregelt wird, und/oder
- eine Enthalpiedifferenz im Nassdampfgebiet beim jeweiligen Niederdruck ND.

Vorteilhaft wird somit bewirkt, dass sich in Abhängigkeit der gegebenen Betriebsbedingungen des Dampfkompressionskreises 200 sowie in Abhängigkeit der Stellgröße "Öffnungsgrad Expansionsventil 230" ein korrespondierender Kältemittelzustand beim Austritt 252 aus dem Rekuperator 250 beim Niederdruck ND einstellt.

Im eingeschwungenen Zustand ergibt sich hinsichtlich Regelstreckensteilheit der "isolierten" Regelstrecke beim Niederdruck ND des Kältemittels im niederdruckseitiger Pfad des Rekuperators 250 ein Regelstreckenverhalten mit hoher Steilheit, bei in etwa gleichbleibendem inneren Energiezustand des Kältemittels beim Eintritt 251 in den niederdruckseitigen ND Pfad des Rekuperators 250. Mit einer insbesondere relativen Öffnungsgradänderung des Expansionsventil von 1 % wird eine Überhitzungsänderung am Austritt des Kältemittels aus dem Verdampfer 230 von vorteilhaft etwa 10 K oder auch über 10 K eingestellt.

Gegenüber dem Rekuperator 250 erfolgt vorteilhaft eine wesentlich höhere Wärmeübertragung im Verdampfer 240 zwischen dem Quellmedium und dem Kältemittel im Verdampfer 240.

So wird im Verdampfer 240 eine wesentlich höhere Wärmeübertragung als im Rekuperator 250 eingestellt, da der Umgebung mittels Verdampfer 240 eine wesentlich größere Energie entzogen werden soll, als sie nur im Rekuperator 250 innerhalb des Kältekreises zu übertragen. Die treibende Temperaturdifferenz beträgt beispielsweise im Rekuperator zwischen 20 K bis 60 K, während diese im Verdampfer lediglich zwischen 3 K bis 10 K beträgt. Um die gewünschten Energien trotz unterschiedlicher treibender Temperaturdifferenzen übertragen zu können, wird beispielsweise die Austauscherfläche des Verdampfers ca. 5 bis 20 mal größer ausgelegt als die des Rekuperators 250.

Die Einstellung dieses Zustandes erfolgt hierbei vorteilhaft unter Verwendung wenigstens einer der folgenden Zeitkonstanten Z:
- Mit einer elften Zeitkonstante Z₁₁ wird vorteilhaft eine Verzögerung der mechanischen Öffnungsgradänderung des Expansionsventils 230 durch die Begrenzung einer Verfahrgeschwindigkeit vorgegeben.
- Eine zwölfte Zeitkonstante Z₁₂ wirkt vorteilhaft auf die verzögerte Einstellung eines korrespondierenden Niederdruckes ND bei Öffnungsgradänderungen des Expansionsventils 230 aufgrund der Kompressibilität des Kältemitteldampfes im Niederdruckpfad ND.
- Eine 13. Zeitkonstante Z₁₃ ist eine thermische Zeitkonstante der Wärmeübertragungsschicht des Verdampfers. Somit bewirkt eine Änderung des Verdampfungsdruckes und damit der Verdampfungstemperatur eine verzögerte Temperaturänderung der Wärmeübertrageschicht, welche oft mehrere Kilogramm Metall beinhaltet, und des Kältemittels im Niederdruckpfad des Verdampfers 240.
- Eine 14. Zeitkonstante Z₁₄ wird vorteilhaft aus verzögerten Aggregatzustandsänderungen des Kältemittels bei Verdampfungstemperaturänderungen ermittelt oder vorgegeben.
- Eine 15. Zeitkonstante Z₁₅ ergibt sich vorteilhaft aus dem Transport des Kältemittels durch den Verdampfer 240 mit einer endlichen Strömungsgeschwindigkeit und wird berücksichtigt.

Der niederdruckseitige Kältemittelpfad des Rekuperators 250 wird aus dem Verdampferaustritt 242 des Verdampfers 240 gespeist. Der innere Energiezustand des Kältemittels wird auch hier bereits durch zumindest zwei Zeitkonstanten Z, Z₁₁, Z₁₂, Z₁₃, Z₁₄, Z₁₅, Z_{ges} nach Änderung der Stellgröße "Öffnungsgrad Expansionsventil" verzögert.

Nach Änderung der Stellgröße "Öffnungsgrad Expansionsventil 230" stellt sich dann eine weitere Verzögerung der korrespondierenden Kältemittelzustandsänderung durch das Zeitverhalten des Rekuperators 250 beim Austritt aus dem niederdruckseitigen Kältemittelpfad des Rekuperators 250 ein.

Das Zeitverhalten des Rekuperators 250 lässt sich vorteilhaft als Rekuperatorgesamt - Zeitkonstante Z_{ges} abhängig vom jeweiligen Arbeitspunkt des Dampfkompressionskreises im Bereich zwischen in etwa 1 Minuten bis 30 Minuten berücksichtigen.

Es erfolgt vorteilhaft eine gewichtete Kombination Verdichtereintrittsüberhitzung dT_{ÜE} und der der Verdampferaustrittsüberhitzung dT_{ÜA}, indem insbesondere mittels einer gewichteten Kombination der Regelabweichung der Verdichterüberhitzung und der Regelabweichung der Verdampferaustrittsüberhitzung dT_{ÜA} die Gesamtregelabweichung berechnet wird, welche im Regler 500 zur Regelung des Dampfkompressionskreises 200 eingespeist wird.

Die Verdichtereintrittsüberhitzung dT_{ÜE} wird vorteilhaft als Haupt- Regelgröße verwendet und die korrespondierenden Signalflüsse und Signalverarbeitungen erfolgt insbesondere in den folgenden Verfahrensschritten:

### Schritt 1

Zunächst werden die Prozessgrößen Verdichtereintrittsüberhitzung dT_{ÜE} vorteilhaft als Hauptregelgröße und die Verdampferaustrittsüberhitzung dT_{ÜA} vorteilhaft als Hilfsgröße in einem ersten Verfahrensschritt messtechnisch erfasst.

Dazu wird jeweils eine Verdampfungstemperatur des Kältemittels am jeweiligen Erfassungspunkt entweder
- direkt messtechnisch ermittelt, mit einem Temperatursensor, welcher so positioniert ist, dass er eine der Kältemitteltemperatur im Nassdampfgebiet entsprechende Temperatur erfasst oder
- indirekt messtechnisch ermittelt, mit einem Drucksensor, welcher einen Kältemitteldruck des im Nassdampfgebiet verdampfenden Kältemittels erfasst und aus der kältemittelspezifischen Abhängigkeit zwischen Druck und Temperatur im Nassdampfgebiet dann die Verdampfungstemperatur berechnet wird.

Des Weiteren wird am jeweiligen dem Überhitzungsmesspunkt, insbesondere am Verdampferausgang 242 und/oder am Verdichtereingang 211 zugeordneten Temperaturen der Kältemitteltemperatur mittels Temperatursensoren 501, 508 erfasst. Es wird dann die Temperaturdifferenz des Kältemittels am jeweiligen Messpunkt und der Verdampfungstemperatur berechnet und dieser Temperaturdifferenzwert entspricht dann der jeweiligen Überhitzung des Kältemittels am Messpunkt.

Ausgangsgrößen der Berechnung in Schritt 1 sind dann die Verdichtereintrittsüberhitzung dT_{ÜE} und die Verdampferaustrittsüberhitzung dT_{ÜA}.

### Schritt 2

Die Prozessgrößen Verdichtereintrittsüberhitzung dT_{ÜE} und Verdampferaustrittsüberhitzung dT_{ÜA} werden zur Bildung zugeordneter Regelabweichungen mit jeweils zugeordneten Sollwerten in einem zweiten Schritt vorteilhaft verrechnet:
Der Sollwert für die Verdichtereintrittsüberhitzung dT_{ÜE} wird vorteilhaft zur Sicherstellung des zulässigen Verdichtersbetriebsbereiches und eines möglichst hohen Wirkungsgrades des Kältekreises im Bereich zwischen ca. 5 K bis 20 K variiert.

Der Sollwert für die Verdampferaustrittsüberhitzung dT_{ÜA} am Verdampferaustritt 242 wird dann in Abhängigkeit der Kältekreis-Betriebsart und des Kältekreis-Arbeitspunktes so variiert, dass die Verdampferüberhitzung im eingeschwungenen Regelfall in etwa dem sich einstellenden Prozesswert der Verdampferaustrittsüberhitzung dT_{ÜA} entspricht. Dieser Sollwert für die Verdampferaustrittsüberhitzung dT_{ÜA} kann modellbasiert in Abhängigkeit von einer Betriebsart oder einem Arbeitspunkt abhängig von der Verdampfungstemperatur, der Kondensationstemperatur, der Verdichterleistung, einem Sollwert der Verdichtereintrittsüberhitzung dT_{ÜE} am Verdampferaustritt 242 und/oder von Komponenteneigenschaften vorberechnet werden und adaptiv korrigiert werden.

Es wird dann die Regelabweichung der Verdichtereintrittsüberhitzung dT_{ÜE} berechnet, indem vom Prozesswert der Verdichtereintrittsüberhitzung dT_{ÜE} der Sollwert der Verdichtereintrittsüberhitzung dT_{ÜE} subtrahiert wird.

Es wird dann die Regelabweichung der Verdampferaustrittsüberhitzung dT_{ÜA} berechnet, indem vom Prozesswert der Verdampferaustrittsüberhitzung dT_{ÜA} der Sollwert der Verdampferaustrittsüberhitzung dT_{ÜA} subtrahiert wird.

### Schritt 3

In einem dritten Verfahrensschritt werden die Regelabweichung der Verdichtereintrittsüberhitzung dT_{ÜE} und die Regelabweichung der Verdampferaustrittsüberhitzung dT_{ÜA} vorteilhaft zu einer Gesamtregelabweichung-Überhitzung kombiniert.

Die Kombination erfolgt insbesondere mittels einer gewichteten Addition der Einzel - Regelabweichungen.

Der Gewichtungseinfluss ist ein Maß für die anteilige Kombination der Einzel - Regelabweichungen und kann im Extremfall die ausschließliche Einbeziehung nur einer Einzel - Regelabweichung, aber üblicherweise die gewichtete Einbeziehung beider Einzel - Regelabweichungen bewirken.

Vorteilhaft wird der Gewichtungseinfluss als Wert zwischen 0 bis 1, also 0 bis 100 % veranschlagt und dieser Wert wird auf den Grad der Einbeziehung der Regelabweichung der Verdichtereintrittsüberhitzung dT_{ÜE} in die Gesamt - Regelabweichung einbezogen, womit sich für die Berechnung der Gesamt - Regelabweichung folgende Abhängigkeit ergibt: Gesamt - Regelabweichung Überhitzung = (Gewichtungseinfluss * Regelabweichung Verdichtereintrittsüberhitzung) + ((1 - Gewichtungseinfluss) * Regelabweichung Verdampferaustrittsüberhitzung)

Der Wert des Gewichtungseinfluss kann vorteilhaft von der Betriebsart und/oder dem Arbeitspunkt der Wärmepumpe 100 abhängig variiert werden:
- Beim Betriebsartübergang zwischen Betriebsart = Betrieb mit ausgeschaltetem Verdichter 210 und Betriebsart = Betrieb mit eingeschaltetem Verdichter 210 im Heizbetrieb wird aufgrund der dynamischen Prozesswerteänderungen beim Anfahren des Dampfkompressionssystems 200 vorteilhaft ausschließlich zunächst die Regelabweichung Verdampferaustrittsüberhitzung dT_{ÜA} in die Gesamt - Regelabweichung einbezogen, insbesondere ist der Wert eines Gewichtungseinflusses dann zunächst = 0 oder ein Wert vorteilhaft unter 20 %.
- Nach einer Stabilisierungsphase des Dampfkompressionssystems 200 ist es vorteilhaft, nicht spontan auf den für den Regelbetrieb ausgelegten Wert des Gewichtungseinflusses umzuschalten, sondern den Übergang rampenförmig zu gestalten. In diesem Fall ist es vorteilhaft, dass der Wert vom Gewichtungseinfluss vom Startwert = 0, oder einem Wert insbesondere unter 20%, vorteilhaft rampenförmig auf den vorgesehenen Zielwert angehoben werden. Hiermit wird insbesondere eine Werteunstetigkeit bei einem spontanen Umschalten vermieden und somit Regelschwingungen vermieden.
- Der Zielwert des Gewichtungseinflusses wird vorteilhaft an die jeweilige Betriebsart und den Arbeitspunkt angepasst. Betriebspunkte, welche sich durch erhöhte Schwingneigung auszeichnen bedürfen vorteilhaft einer geringeren Gewichtung der Regelabweichung der Verdichtereintrittsüberhitzung dT_{ÜE}, insbesondere wird hiermit ein regeltechnisch kritisches Signalverhalten der Verdichtereintrittsüberhitzung dT_{ÜE} aufgrund der gegenüber der Verdampferaustrittsüberhitzung dT_{ÜA} größeren Signalverzögerung und größeren Streckensteilheit eine Schwingneigung vermieden.

### Schritt 4:

In einem vierten Verfahrensschritt wird die berechnete Gesamt - Regelabweichung der Überhitzung dann im Regler 500 verarbeitet, welcher die korrespondierenden Aktoren des Kältekreises, insbesondere das Expansionsventil 230 mit dem stellbarem Öffnungsgrad und/oder den Verdichter 210 mit stellbarer Verdichterdrehzahl, so steuert, dass sich im eingeregelten Fall eine Regelabweichung der Überhitzung gleich möglichst etwa 0 Kelvin einstellt.

Dabei kann ein P, I, PI, PID - Regler eingesetzt werden, wobei die Regelanteile an die jeweilige Betriebsart und den Arbeitspunkt vorteilhaft dynamisch angepasst werden.

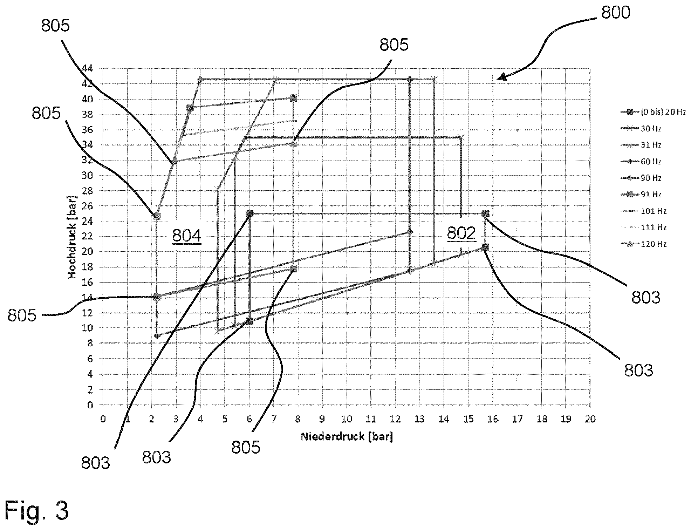

Fig. 3 zeigt schematisch und exemplarisch ein Verdichterkennfeld 800, bei dem ein Niederdruck auf der horizontalen Achse und ein Hochdruck auf der vertikalen Achse aufgetragen sind. Für je eine bestimmte Verdichterdrehzahl sind unterschiedliche zulässige Grenzen sowohl für den Hochdruck (HD) als auch den Niederdruck (ND) zu sehen.

Gezeigt sind Wertepaare aus ND und HD, welche die Betriebsbereichgrenzen je Stützstelle definieren. Innerhalb einer die Wertepaare verbindenden Kurve liegt der für den zu einer bestimmten Stützstelle gehörenden Drehzahlwert zulässige Betriebsbereich.

Ein Betriebsbereich 802, der zu einem beispielhaften Drehzahlwert von maximal 20 Hz gehört, sowie ein Betriebsbereich 804, der zu einem beispielhaften Drehzahlwert von 120 Hz gehört, werden nachfolgend im Detail beschrieben.

Die relevanten Wertepaare aus ND und HD sind für den Betriebsbereich 802 mit Bezugszeichen 803, für den Betriebsbereich 804 mit Bezugszeichen 805 dargestellt. Es kann gesehen werden, dass für den niedrigeren Drehzahlwert des Betriebsbereiches 802 ein zulässiger maximaler Hochdruck von etwa 25 bar vorliegt, der deutlich niedriger als der zulässige maximale Hochdruck von etwa 25 bar für den Betriebsbereich 804 ist. Signifikant sind auch die Abweichungen auf Niederdruckseite, hier steht beispielsweise ein maximal zulässiger ND von über 15 bar für den Betriebsbereich 802 einem maximal zulässigen ND von knapp 8 bar für den Betriebsbereich 804 gegenüber.

Für Drehzahlwerte, die zwischen den als Stützstellen vorhandenen, dargestellten Betriebsbereichen liegen, kann interpoliert werden. Die Bereiche können als Tabellen oder Funktionen hinterlegt sein. Beispielsweise kann derart interpoliert werden, dass wenn die aktuelle Verdichterdrehzahl zwischen zwei Stützstellen-Drehzahlen gelegen ist, ein Koeffizient gebildet wird, welcher die Lage der aktuelle Verdichterdrehzahl bezüglich der flankierenden Drehzahlstützstellen beschreibt und mit diesem Koeffizienten das Verhältnis des Einflusses der jeweiligen korrespondierenden den flankierenden Stützstellendrehzahlen zugeordneten Hochdruck / Niederdruck - Wertepaare auf die Berechnung der für die aktuelle Drehzahl geltenden Hochdruck / Niederdruck - Wertepaare hat.

Das Kennfeld 800 ist kältemittelabhängig und verdichterabhängig.

Zusätzlich können weitere Randbedingungen, beispielsweise ein Maximalwert des Druckverhältnisses HD/ND, sowie Mindestwerte für eine Druckdifferenz HD/ND für bestimmte Werte der Verdichterdrehzahl oder über die gesamte Verdichterdrehzahl über das Kennfeld selbst festgelegt sein.

Der zulässige Betriebsbereich bezüglich der aktuellen Verdichterdrehzahl wird anhand des Kennfeldes 800 berechnet. So werden beispielsweise die die aktuelle Drehzahl flankierenden Drehzahlstützwerte bestimmt und Element für Element linear interpoliert.

Befindet sich der Wert der Verdichterdrehzahl außerhalb des Bereiches, welcher mit den Drehzahlstützstellen umschlossen wird, kann für weitere Berechnungen das Feld mit derjenigen korrespondierenden Drehzahlstützstelle verwendet werden, welche die geringste Differenz zur Verdichterdrehzahl aufweist.

Für die erfindungsgemäße Regelung wird dann für eine bestimmte Verdichterdrehzahl eine minimale Niederdruckgrenze (NDmin), eine maximale Niederdruckgrenze (NDmax), eine minimale Hochdruckgrenze (HDmin) und eine maximale Hochdruckgrenze (HDmax) bestimmt.

Weitere optionale Eingangsparameter für die Regelung ist die aktuelle Invertertemperatur, eine Grenze für die maximale Invertertemperatur, ein aktuelles Verdichterdrehmoment sowie eine Grenze für das maximale Verdichterdrehmoment.

Insbesondere werden dabei für die Berechnung des zulässigen Bereiches als Funktion des aktuellen Hochdruckes und der Verdichterdrehzahl Grenzwerte für den zulässigen Bereich des Niederdruckes berechnet:
- Niederdruckgrenze min (NDmin)
- Niederdruckgrenze max (NDmax)

Weiterhin werden als Funktion des aktuellen Niederdruckes und der Verdichterdrehzahl Grenzwerte für den zulässigen Bereich des Hochdruckes berechnet:
- Hochdruckgrenze min (HDmin)
- Hochdruckgrenze max (HDmax)

Zur Vermeidung eines Überschreitens dieser Grenzwerte können jeweils in Abhängigkeit verschiedener weiterer Einflussfaktoren eine Auswahl von Gegensteuermaßnahmen ergriffen werden:
- Erhöhung der Verdichterdrehzahl
- Verringerung der Verdichterdrehzahl
- Erhöhung der Lüfterdrehzahl oder der Pumpendrehzahl zum Fördern des wärmequellenseitigen Wärmeträgermediums bei Sole / Wasser - Wärmepumpen
- Verringerung der Lüfterdrehzahl oder der Pumpendrehzahl zum Fördern des wärmequellenseitigen Wärmeträgermediums bei Sole / Wasser - Wärmepumpen
- Erhöhung der Wasserpumpendrehzahl (zum Fördern des zum Heizen / Kühlen / Warmwasserladen verwendeten Wärmeträger - Mediums), die der Wärmepumpe zugeordnet ist
- Verringerung der Wasserpumpendrehzahl (zum Fördern des zum Heizen / Kühlen / Warmwasserladen verwendeten Wärmeträger - Mediums), die der Wärmepumpe zugeordnet ist
- Erhöhung des Öffnungsgrades des Drosselorgans, beispielsweise eines Haupt - Expansionsventils (zur Verringerung der Überhitzung am Verdichtereingang)
- Verringerung des Öffnungsgrades des Drosselorgans (zur Erhöhung der Überhitzung am Verdichtereingang / Verringerung des Niederdruckes)
- Ggf. weitere Möglichkeiten zur Reduzierung der Heißgastemperatur durch Manipulation des Öffnungsgrades des Expansionsventils für Zwischeneinspritzung Welche Auswahl an Gegensteuermaßnahmen ergriffen werden, ist abhängig von
- der jeweiligen Grenze (NDmin, NDmax, HDmin, HDmax)
- dem Drehzahlbereich, in welchem der Verdichter aktuell betrieben wird
- der Einstellung des zugeordneten Parameters für Aktionskonfiguration

Dafür werden erfindungsgemäß zunächst Drehzahlbereiche parametriert, innerhalb derer die einer Bereichsüberschreitung entgegenwirkenden Maßnahmen gleich sind. Diese sogenannten Drehzahlbereichsklassen beschreiben also, welche gegensteuernden Aktionen aus der Liste möglicher Aktionen zulässig sind.

Für die jeweilige Drehzahlbereichsklasse wird beispielsweise diejenige Drehzahl per Parameter eingestellt, welche die obere Bereichsgrenze für den Übergang zum nächsten Bereich abbildet.

Die erste Drehzahlbereichsklasse hat als untere Bereichsgrenze den Wert Verdichterdrehzahl = 0. Der zulässige Gesamtdrehzahlbereich des Verdichters kann in 2, 3 oder eine größere Anzahl von Drehzahlbereichsklassen aufgeteilt werden.

Die Aufteilung in Drehzahlbereichsklassen erfolgt vorzugsweise in Abhängigkeit der für den jeweiligen Verdichtertyp im Betrieb mit dem jeweiligen Kältemittel geltenden Arbeitsbereichs-Grenz-Anforderungen. Diese Anforderungen legt beispielsweise der Verdichterhersteller für den jeweiligen Verdichtertyp im Zusammenhang mit dem Kältemittel fest. Aus diesen Anforderungen leitet der Reglerentwickler dann die Drehzahlbereichsklassen so ab, dass Aufwand und Nutzen in einem möglichst guten Verhältnis stehen. Zur Erzielung einer für alle Kriterien geltenden möglichst optimalen Regelpräzision könnte man sicherlich mehr als 5 Verdichterdrehzahlbereiche einzeln definieren, aber eine Beschränkung auf 3 oder 4 Bereiche kommt dem Optimum recht nahe, ohne die Komplexität und den Aufwand der Definition zu überreizen.

Mit Hilfe von Parametern für die Aktions - Bereichs - Einstellung kann festgelegt werden, in welchem Abstand zu den jeweiligen Grenzen (NDmin, NDmax, HDmax, Strom max, Moment max) mit entgegenwirkenden Maßnahmen begonnen wird.

Für die verschiedenen Grenzbereiche (ND min, ND max, HD max, Strom max, Moment max) kann die jeweils zugeordnete Bereichsgröße vorzugsweise separat per Parameter eingestellt werden.

Ferner kann mit Hilfe von Parametern für die Verstärkungseinstellung der gegensteuernden Maßnahmen eingestellt werden, welcher Änderung des auslösenden Prozesswertes (z.B. Hochdruck tritt in den Grenzbereich ein) welche Änderung der gegensteuernden Maßnahme (z.B. Faktor für eine Drehzahländerung wird berechnet) bewirkt.

Die Parameter werden besonders bevorzugt so definiert, dass als Parameterwert derjenige Faktor für die korrespondierende gegensteuernde Maßnahme eingestellt wird, welcher direkt an der Grenze (des Arbeitsbereiches) gesteuert werden soll. Beispielsweise kann hierfür für eine Verringerung ein Faktor = 0,5 und für eine Erhöhung ein Faktor = 2 festgelegt sein.

Außerhalb des Aktionsbereiches bis zum Eintritt in den Aktionsbereich einer gegensteuernden Aktion ist der Faktor = 1 und wird dann im Aktionsbereich vorzugsweise linear bis zum Wert des Parameters (für die Verstärkungseinstellung) an der Grenze (des Arbeitsbereiches) interpoliert. Der Eintritt in den Aktionsbereich kann bei einem Abstandsschwellwert zu der jeweiligen Grenze (des Arbeitsbereiches) erfolgen, der interpolierte Faktor wird vorzugsweise als Änderungsfaktor bezeichnet.

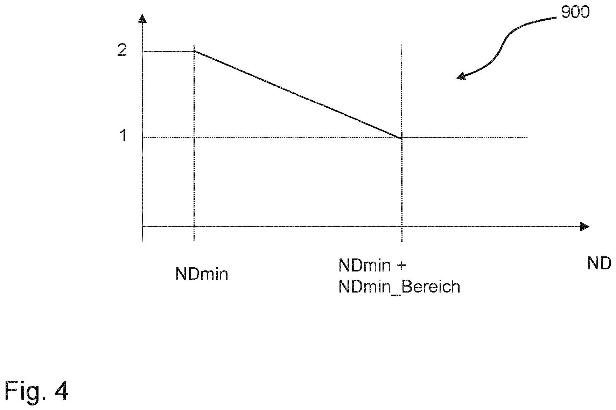

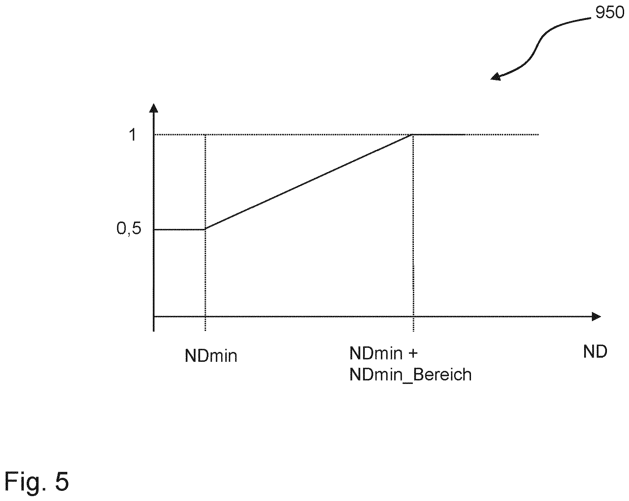

Die Bestimmung von Änderungsfaktoren wird schematisch und exemplarisch mit Verweis auf Fig. 4 und 5 für die untere Grenze des Niederdruckes NDmin erläutert.

In Fig. 4 wird ein Verlauf 900 der Erhöhung beispielsweise der Verdichterdrehzahl in Abhängigkeit des Wertes des Niederdruckes ND als Änderungsfaktor zwischen 2 und 1 bestimmt. Für einen Niederdruck ND im Bereich der unteren Grenze NDMin wird der Änderungsfaktor 2 bestimmt, dieser nimmt in dem Beispiel linear bis zu einem Niederdruckwert ND ab, der der unteren Grenze NDMin plus einem Abstandsschwellwert NDmin_Bereich entspricht. Bei Niederdruckwerten größer als dem Niederdruck NDmin + NDmin_Bereich ist der Änderungsfaktor gleich 1, das heißt, dass keine Änderung stattfindet. Der Änderungsfaktor kann an der Grenze NDMin auch zwischen 1 und 2 oder größer als 2 liegen, was auf die Bedürfnisse der spezifischen Anwendung angepasst wird.

In Fig. 5 wird ein Verlauf 950 der Reduzierung beispielsweise der Verdichterdrehzahl in Abhängigkeit des Wertes des Niederdruckes ND als Änderungsfaktor zwischen 0,5 und 1 bestimmt. Analog zu Fig. 4 wird an der Grenze NDmin die betragsmäßig größte Änderung, d.h. im Falle der Reduzierung der kleinste Änderungsfaktor, erwirkt, die bis zu dem Niederdruckwert NDmin+NDmin_Bereich auf 1, also keine Änderung, ansteigt.

Analog sind ähnliche Verhalten der Änderungsfaktoren für unterschiedliche Grenzen und Aktoren bestimmbar.

Anschließend werden diejenigen Faktoren, welche zwar aufgrund einer Gegensteuerung für unterschiedliche Grenzen, d.h. beispielsweise NDmin, HDmax, aber
- in gleicher Wirkrichtung
- den gleichen Aktor
als gegensteuernde Maßnahme bedienen, miteinander kombiniert, vorzugsweise abgeglichen.

So werden beispielsweise alle Faktoren, welche eine Verdichterdrehzahlreduzierung bewirken würden, dergestalt abgeglichen, dass derjenige Faktor weiterverarbeitet wird, welcher die größte Drehzahlreduzierung bewirken würde.

Es setzt sich hier also das Minimum aller Faktoren als abgeglichener Wert für eine Verdichterdrehzahlreduzierung durch.

So werden weiterhin beispielsweise alle Faktoren, welche eine Verdichterdrehzahlerhöhung bewirken würden, dergestalt abgeglichen, dass derjenige Faktor weiterverarbeitet wird, welcher die größte Drehzahlerhöhung bewirken würde.

Es setzt sich hier also das Maximum aller Faktoren als abgeglichener Wert für eine Verdichterdrehzahlerhöhung durch.

Als nächster Schritt werden dann alle abgeglichenen Faktoren, welche sich zwar auf den gleichen Aktor beziehen, aber eine entgegengerichtete Wirkung erzielen miteinander paarweise verrechnet. Die Verrechnung erfolgt als Multiplikation, sodass die Wirkung der gegenläufigen Faktoren dergestalt verknüpft wird, dass in der resultierenden Wirkrichtung derjenige Faktor dominiert, welcher sich relativ stärker vom Wert 1 unterscheidet.

Ist der Faktor für Verdichterdrehzahlreduzierung beispielsweise gleich 0,8 und der Faktor für Verdichterdrehzahlerhöhung beispielsweise 1,4 , so wird eine Verdichterdrehzahländerung um den Faktor 1,12 berechnet.

Weiterhin können für die erfindungsgemäße Bereichsregelung auch Grenzwerte weiterer Prozessgrößen eingebunden werden, wie
- Drehmoment max
- Verdichterstrom max
- Invertertemperatur max

Für die Auswahl der in Betracht zu ziehenden Aktionen, d.h. für die Erlangung der Aktionskonfiguration, wird neben der Drehzahlbereichsklasse vorzugsweise auch die Betriebsart herangezogen. Dabei wird unterschieden, ob die Betriebsart Heizbetrieb oder Kühlbetrieb ist, weil speziell auf die Betriebsart angepasste Gegensteuermaßnahmen erforderlich sind, um den zulässigen Betriebsbereich des Kompressors einzuhalten.

Beispielsweise ist eine Erhöhung der Lüfterdrehzahl im Kühlbetrieb sinnvoll, wenn sich der Hochdruck an die maximal zulässige Grenze annähert.

Eine Erhöhung der Lüfterdrehzahl würde bewirken, dass die Wärmeenergie des im Kühlbetrieb als Verflüssiger wirkenden Lamellen- / Rohraustauschers besser an die Umgebungsluft abgegeben wird, dadurch reduziert sich die Siedetemperatur des Kältemittels im Austauscher und der Hochdruck sinkt.

Im Heizbetrieb würde eine Erhöhung der Lüfterdrehzahl allerdings bewirken, dass sich der Wärmeübergang zwischen Verdampfer und Außenluft geringfügig verbessert, die Kälteleistung und damit die Heizleistung und damit der Hochdruck würde (geringfügig) steigen, was unter diesen Bedingungen (Hochdruck in der Nähe der oberen Grenze) nicht sinnvoll wäre.

So resultieren für verschiedene mögliche Aktionen und verschiedene Drehzahlbereichsklassen ganz unterschiedliche Ergebnisse, was die Freigabe der jeweiligen Aktion betrifft. Die Liste der möglichen Aktionen enthält vorzugsweise mehrere, insbesondere sämtliche der nachfolgenden freizugebenden Aktionen:
- NDmin Verdichterdrehzahlerhöhung
- NDmin Verdichterdrehzahlreduzierung
- NDmin Lüfterdrehzahlerhöhung / Wärmequellenpumpendrehzahlerhöhung
- NDmin Drosselorgan Öffnungsgraderhöhung
- NDmax Verdichterdrehzahlerhöhung
- NDmax Verdichterdrehzahlreduzierung
- NDmax Drosselorgan Öffnungsgradreduzierung
- HDmax Verdichterdrehzahlerhöhung
- HDmax Verdichterdrehzahlreduzierung
- HDmax Lüfterdrehzahlerhöhung
- HDmax Pumpendrehzahlerhöhung
- HDmin Pumpendrehzahlreduzierung
- Drehmomentmax Verdichterdrehzahlerhöhung
- Drehmomentmax Verdichterdrehzahlreduzierung
- Drehmomentmax Drosselorgan Öffnungsgradreduzierung
- Invertertemperaturmax Verdichterdrehzahlreduzierung

### Beispiel 1

NDmin Verdichterdrehzahlerhöhung wird im Drehzahlbereich bis 92 Hz freigegeben
- Bei Verdichterdrehzahlen zwischen 20 Hz und 45 Hz bewirkt eine Verdichterdrehzahlerhöhung im gesamten Hochdruckbereich eine gewünschte Reduzierung der ND - min - Grenze
- Bei Verdichterdrehzahlen zwischen 46 Hz und 75 Hz bewirkt eine Verdichterdrehzahlerhöhung im gesamten Hochdruckbereich keine Reduzierung der ND - min - Grenze. Hier ist die gewählte Parametrierung wirkungslos oder sogar unvorteilhaft. Eine Freischaltung ist trotzdem erforderlich, um bei niedrigen Außentemperaturen (-15°C) und hohen Vorlauftemperaturen (>55°C) die Verdichterdrehzahl so weit zu erhöhen (ggf. um Faktor 2 auf 90 Hz), dass der Arbeitspunkt der Kompressionskälteanlage dann wieder im zulässigen Bereich ist.
- Bei Verdichterdrehzahlen zwischen 76 Hz und 92 Hz bewirkt eine Verdichterdrehzahlerhöhung zumindest bei Hochdrücken über 27 bar eine gewünschte Reduzierung der ND - min - Grenze

### Beispiel 2

NDmin Verdichterdrehzahlreduzierung wird im Drehzahlbereich zwischen 93 Hz und 120 Hz freigegeben
- Bei Verdichterdrehzahlen zwischen 93 Hz und 120 Hz bewirkt eine Verdichterdrehzahlreduzierung fast im gesamten Hochdruckbereich keine gewünschte Reduzierung der ND - min - Grenze. Jedoch wird durch eine Reduzierung der Verdichterdrehzahl in etwa proportional die Kälteleistung reduziert, damit verringert sich die Temperaturdifferenz zwischen Verdampfungstemperatur und Aussentemperatur, was mit einer Erhöhung des Niederdruckes einhergeht und somit den Abstand zur ND min - Grenze vergrößert, was eine gewünschte Wirkung ist.

### Beispiel 3

NDmax Verdichterdrehzahlreduzierung wird im Drehzahlbereich zwischen 76 Hz und 120 Hz freigegeben
- Bei Verdichterdrehzahlen zwischen 76 Hz und 120 Hz bewirkt eine Verdichterdrehzahlreduzierung fast im gesamten Hochdruckbereich eine gewünschte Erhöhungung der ND - max - Grenze

### Beispiel 4

HDmax Verdichterdrehzahlerhöhung wird im Drehzahlbereich bis 45 Hz freigegeben
- Bei Verdichterdrehzahlen zwischen 20 Hz und 45 Hz bewirkt eine Verdichterdrehzahlerhöhung im gesamten Niederdruckbereich eine gewünschte Erhöhung der HD - max - Grenze

### Beispiel 5

HDmax Verdichterdrehzahlreduzierung wird im Drehzahlbereich zwischen 93 Hz und 120 Hz freigegeben
- Bei Verdichterdrehzahlen zwischen 93 Hz und 120 Hz bewirkt eine Verdichterdrehzahlreduzierung fast im gesamten Niederdruckbereich eine gewünschte Erhöhung der HD - max - Grenze

Tritt ein als relevant parametrierter Prozesswert in den Aktionsbereich einer Verdichterdrehzahl beeinflussenden Gegensteuermaßnahme ein (beispielsweise der Hochdruck HD nähert sich der Hochdruckgrenze HDmax), so wird als gegensteuernde Maßnahme ein Faktor der Verdichterdrehzahländerung ungefiltert entsprechend der gewünschten relativen Drehzahlkorrektur variiert.

Ändert sich jedoch nach Variation der Verdichterdrehzahl eine berechnete geänderte Hochdruckgrenze HDmax, kann dies wiederum eine Änderung des Werts der Verdichterdrehzahländerung bewirken.

Unter ungünstigen Umständen ist durch diese sich selbst verstärkende Gesamtsystemreaktion eine Schwingneigung nicht ausgeschlossen.

Vorzugsweise ist zur Dämpfung der Schwingneigung eine Begrenzung der Änderungsgeschwindigkeit der Verdichterdrehzahländerung vorgesehen, wobei die maximal mögliche Änderungsgeschwindigkeit, genannt Verdichterdrehzahlrampe, insbesondere in %/sec einstellbar ist.

Eine Einstellung der Verdichterdrehzahlrampe = 1%/sec würde bewirken, dass sich der Faktor Verdichterdrehzahländerung nur um maximal 1%/sec ändern würde, was wiederum einer durch das erfindungsgemäße Verfahren bedingten maximalen Verdichterdrehzahländerungsgeschwindigkeit von 1%/sec entspräche.

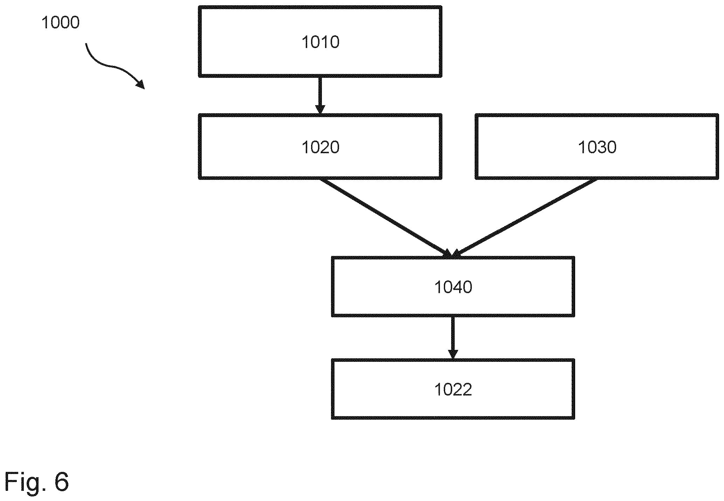

Fig. 6 zeigt schematisch und exemplarisch ein Flussdiagramm eines erfindungsgemäßen Verfahrens 1000 zum Regeln einer Kompressionskälteanlage 200.

In einem Schritt 1010 wird für die aktuelle Drehzahl des Verdichters ein maximal zulässiger Hochdruck (HDmax), ein minimal zulässiger Hochdruck (HDmin), ein maximal zulässiger Niederdruck (NDmax) und ein minimal zulässiger Niederdruck (NDmin) bestimmt.

In einem Schritt 1020 werden auf Basis der Grenzwerte aus Schritt 1010 Abständen des aktuellen Hochdrucks zu dem minimal und maximal zulässigen Hochdruck, sowie Abstände des aktuellen Niederdrucks zu dem maximal und minimal zulässigen Niederdruck bestimmt.

In einem Schritt 1030 wird die aktuellen Drehzahlbereichsklasse zum Erhalten der zulässigen gegensteuernden Aktionen aus der Vielzahl von Drehzahlbereichsklassen bestimmt. Die zulässigen gegensteuernden Aktionen können optional darüber hinaus von der Betriebsart, beispielsweise Heizen und Kühlen, abhängen.

In einem Schritt 1040 wird, je zulässige gegensteuernde Aktion aus Schritt 1030, ein Änderungsfaktors des zu der gegensteuernden Aktion gehörenden Aktors in Abhängigkeit wenigstens eines der in Schritt 1020 bestimmten Abstände berechnet.

In einem Schritt 1050 wird dann die Kompressionskälteanlage (200) basierend auf den bestimmten Änderungsfaktoren der Aktoren geregelt.

In einem Beispiel werden die ursprünglichen, beispielsweise von einem Leistungsregler, einem Überhitzungsregler, einem Lüfterregler, einem Pumpenregler, Reglerausgangssignale, beispielsweise Verdichterdrehzahl, Öffnungsgrad Drosselorgan, Lüfterdrehzahlvorgabe, Pumpendrehzahlvorgabe, mit den jeweiligen Änderungsfaktoren der Aktoren wie folgt verknüpft. Die ursprünglichen Reglerausgangssignale werden auch als Stellsignale der Aktoren bezeichnet. Die Verknüpfung ist vorteilhaft multiplikativ. Weiterhin wird als vorteilhafte Ausgestaltung bei Applikation eines Faktors ungleich 1 z.B. der Integralanteil des jeweiligen Reglers der ursprünglichen (vom Leistungsregler , Überhitzungsregler, Lüfterregler, Pumpenregler) Reglerausgangssignale auf den Wert vor Applikation eines Faktors ungleich 1 festgesetzt, um zu vermeiden, dass die Regler dergestalt gegeneinander arbeiten, dass die Regleraktion des erfindungsgemäßen Arbeitsbereichsreglers, der die Änderungsfaktoren erzeugt, zumindest nach einiger Zeit aufgehoben wird.

## Patentansprüche

1. Verfahren zum Regeln einer Kompressionskälteanlage (200) mit
- einem Kältemittel,
- einem Verdampfer (240),
- einem Verdichter (210),
- einem Verflüssiger (220),
- einem Drosselorgan (230) und
- einer Steuereinheit (500)
a) zur Erfassung eines Hochdruckes (HD) und eines Niederdruckes (ND) des Kältemittels in der Kompressionskälteanlage (200),
b) zur Erfassung einer Drehzahl des Verdichters (210),
c) zur Bereitstellung von Drehzahlbereichsklassen des Verdichters, wobei jede Drehzahlbereichsklasse für einen Drehzahlbereich des Verdichters definiert, welche gegensteuernden Aktionen zur Einhaltung des zulässigen Arbeitsbereiches von Komponenten der Kompressionskälteanlage (200) insbesondere des Verdichters (210) aus einer Liste möglicher Aktionen zulässig sind; und
d) zur Regelung wenigstens eines Aktors der Kompressionskälteanlage, insbesondere wenigstens des Drosselorgans (230) und/oder des Verdichters (210), basierend auf dem erfassten Hochdruck (HD) und dem erfassten Niederdruck (ND) insbesondere mit Hilfe eines dem jeweiligen Aktor zugeordneten Stellsignals,
wobei das Verfahren die folgenden Schritte umfasst:
- Bestimmen, für die aktuelle Drehzahl des Verdichters, eines maximal zulässigen Hochdrucks (HDmax), eines minimal zulässigen Hochdrucks (HDmin), eines maximal zulässigen Niederdrucks (NDmax) und eines minimal zulässigen Niederdrucks (NDmin);
- Bestimmen von Abständen des aktuellen Hochdrucks zu dem minimal und maximal zulässigen Hochdruck, sowie von Abständen des aktuellen Niederdrucks zu dem maximal und minimal zulässigen Niederdruck;
- Bestimmen der aktuellen Drehzahlbereichsklasse zum Erhalten der zulässigen gegensteuernden Aktionen;
- Bestimmen, je zulässige gegensteuernde Aktion, eines Änderungsfaktors des zu der gegensteuernden Aktion gehörenden Stellsignal des Aktors in Abhängigkeit wenigstens eines der bestimmten Abstände;
- Regeln der Kompressionskälteanlage (200) basierend auf den bestimmten Änderungsfaktoren der Aktoren.

2. Verfahren nach Anspruch 1, wobei der maximal zulässige Hochdruck (HDmax), der minimal zulässige Hochdruck (HDmin), der maximal zulässige Niederdruck (NDmax) und der minimal zulässige Niederdruck (NDmin) mittels eines Drehzahlkennfeldes des Verdichters, insbesondere durch direktes Ablesen oder Interpolation tabellierter Werte, bestimmt wird.

3. Verfahren nach einem der vorstehenden Ansprüche, wobei das Verfahren einen Schritt des Kombinierens der Änderungsfaktoren des gleichen Aktors enthält, wobei bei Änderungsfaktoren, welche eine gleichgerichtete Änderung bewirken würden, der Schritt des Kombinierens insbesondere ein Auswählen desjenigen Änderungsfaktors des jeweiligen Aktors umfasst, welcher die größte Änderung bewirkt.

4. Verfahren nach einem der vorstehenden Ansprüche, wobei das Verfahren einen Schritt des Kombinierens der Änderungsfaktoren des gleichen Aktors enthält, wobei bei Änderungsfaktoren, welche eine entgegengerichtete Änderung bewirken würden, der Schritt des Kombinierens insbesondere ein Multiplizieren der Änderungsfaktoren umfasst.

5. Verfahren nach einem der vorstehenden Ansprüche, wobei die Steuereinheit zur Regelung des Drosselorgans (230), des Verdichters (210), eines wärmequellenseitigen Lüfters oder einer Solepumpe, und eines wärmesenkenseitigen Aktors wie einer Umwälzpumpe ausgebildet ist.

6. Verfahren nach einem der vorstehenden Ansprüche, wobei der Schritt des Regelns der Kompressionskälteanlage (200) basierend auf den Änderungsfaktoren ein Multiplizieren der Stellgrößen der Aktoren mit den Änderungsfaktoren umfasst.

7. Verfahren nach eine der vorstehenden Ansprüche, wobei die Liste möglicher zulässiger Aktionen für mehrere der von der Steuereinheit regelbaren Aktoren ein Erhöhen und ein Absenken des jeweiligen Stellgrades des Aktors umfasst.

8. Verfahren nach einem der vorstehenden Ansprüche, wobei der Änderungsfaktor als Funktion, insbesondere als lineare Funktion erster Ordnung, wenigstens eines der Abstände bis zu einem Abstandsschwellwert bestimmt werden, wobei der Änderungsfaktor insbesondere auf einen Wertebereich zwischen 0,5 und 1 für Verringerungen oder zwischen 1 und 2 für Erhöhungen beschränkt ist.

9. Verfahren nach einem der vorstehenden Ansprüche, wobei der Schritt des Regelns weitere Randbedingungen des Betriebs, insbesondere ein maximales Druckverhältnis zwischen Hochdruck und Niederdruck und/oder ein Mindesfinierte für eine Druckdifferenz zwischen Hochdruck und Niederdruck, berücksichtigt.

10. Kompressionskälteanlage (200) mit
- einem Kältemittel,
- einem Verdampfer (240),
- einem Verdichter (210),
- einem Verflüssiger (220),
- einem Drosselorgan (230) und
- einer Steuereinheit (500)
a) zur Erfassung eines Hochdruckes (HD) und eines Niederdruckes (ND) des Kältemittels in der Kompressionskälteanlage (200),
b) zur Erfassung einer Drehzahl des Verdichters (210),
c) zur Bereitstellung von Drehzahlbereichsklassen des Verdichters, wobei jede Drehzahlbereichsklasse für einen Drehzahlbereich des Verdichters definiert, welche gegensteuernden Aktionen aus einer Liste möglicher Aktionen zulässig sind; und
d) zur Regelung wenigstens eines Aktors der Kompressionskälteanlage, insbesondere wenigstens des Drosselorgans (230) und/oder des Verdichters (210), basierend auf dem erfassten Hochdruck (HD) und dem erfassten Niederdruck (ND),
wobei die Steuereinheit (500) ferner ausgebildet ist zum:
- Bestimmen, für die aktuelle Drehzahl des Verdichters, eines maximal zulässigen Hochdrucks (HDmax), eines minimal zulässigen Hochdrucks (HDmin), eines maximal zulässigen Niederdrucks (NDmax) und eines minimal zulässigen Niederdrucks (NDmin);
- Bestimmen von Abständen des aktuellen Hochdrucks zu dem minimal und maximal zulässigen Hochdruck, sowie von Abständen des aktuellen Niederdrucks zu dem maximal und minimal zulässigen Niederdruck;
- Bestimmen der aktuellen Drehzahlbereichsklasse zum Erhalten der zulässigen gegensteuernden Aktionen;
- Bestimmen, je zulässige gegensteuernde Aktion, eines Änderungsfaktors des zu der gegensteuernden Aktion gehörenden Aktors in Abhängigkeit wenigstens eines der bestimmten Abstände;
- Regeln der Kompressionskälteanlage (200) basierend auf den bestimmten Änderungsfaktoren der Aktoren.

11. Kompressionskälteanlage nach Anspruch 10, wobei das Kältemittel einen Temperaturglide aufweist, wobei das Kältemittel insbesondere R454c aufweist oder daraus besteht, und wobei die Kompressionskälteanlage (200) insbesondere einem internen Wärmeübertrager (250) zur Übertragung von Wärmeenergie des Kältemittels vor Eintritt in das Drosselorgan (230) an das Kältemittel vor Eintritt in den Verdichter (210) enthält.

12. Wärmepumpe (100) mit einer Kompressionskälteanlage (200) gemäß Anspruch 10 oder 11.

## Claims

1. A method for controlling a compression refrigeration system (200) comprising:
- a refrigerant,
- an evaporator (240),
- a compressor (210),
- a condenser (220),
- a throttle valve (230) and
- a control unit (500)
a) for detecting a high pressure (HD) and a low pressure (ND) of the refrigerant in the compression refrigeration system (200),
b) for detecting a speed of the compressor (210),
c) for providing speed range classes of the compressor, each speed range class defining, for a speed range of the compressor, which counteracting measures from a list of possible measures are permissible for complying with the permissible working range of components of the compression refrigeration system (200), in particular the compressor (210), and
d) for controlling at least one actuator of the compression refrigeration system, in particular at least the throttle valve (230) and/or the compressor (210), based on the detected high pressure (HD) and the detected low pressure (ND), in particular with the aid of a control signal assigned to the respective actuator;
wherein the method includes the following steps:
- determining, for the current speed of the compressor, a maximum permissible high pressure (HDmax), a minimum permissible high pressure (HDmin), a maximum permissible low pressure (NDmax) and a minimum permissible low pressure (NDmin),
- determining differences between the current high pressure and the minimum and maximum permissible high pressures, as well as differences between the current low pressure and the maximum and minimum permissible low pressures,
- determining the current speed range class for complying with the permissible counteracting measures,
- determining, for each permissible counteracting measure, a change factor of the control signal of the actuator associated with the counteracting measure in dependence of at least one of the determined differences,
- controlling the compression refrigeration system (200) based on the determined change factors of the actuators.

2. The method according to claim 1, wherein the maximum permissible high pressure (HDmax), the minimum permissible high pressure (HDmin), the maximum permissible low pressure (NDmax) and the minimum permissible low pressure (NDmin) are determined via a characteristic speed diagram of the compressor, in particular by direct reading or interpolating tabulated values.

3. The method according to any one of the preceding claims, wherein the method includes a step of combining the change factors of the same actuator, wherein, in the case of change factors which would cause a change in the same direction, the step of combining includes in particular selecting the change factor of the respective actuator which causes the greatest change.

4. The method according to any one of the preceding claims, wherein the method includes a step of combining the change factors of the same actuator, wherein, in the case of change factors which would cause a change in opposite directions, the step of combining includes in particular multiplying the change factors.

5. The method according to any one of the preceding claims, wherein the control unit is configured for controlling the throttle valve (230), the compressor (210), a heat source side fan or a brine pump, and a heat sink side actuator, such as a circulation pump.

6. The method according to any one of the preceding claims, wherein the step of controlling the compression refrigeration system (200) based on the change factors includes multiplying the actuating variables of the actuators by the change factors.

7. The method according to any one of the preceding claims, wherein the list of possible permissible measures for multiple of the actuators controllable by the control unit includes increasing and decreasing the respective actuating level of the actuator.

8. The method according to any one of the preceding claims, wherein the change factor is determined as a function, in particular a first-order linear function, of at least one of the differences up to a difference threshold, wherein the change factor is limited in particular to a range of values between 0.5 and 1 for decreases, or between 1 and 2 for increases.

9. The method according to any one of the preceding claims, wherein the step of controlling takes into account further constraints of operation, in particular a maximum pressure ratio between high pressure and low pressure, and/or a minimum value for a pressure differential between high pressure and low pressure.

10. A compression refrigeration system (200) comprising:
- a refrigerant,
- an evaporator (240),
- a compressor (210),
- a condenser (220),
- a throttle valve (230) and
- a control unit (500)
a) for detecting a high pressure (HD) and a low pressure (ND) of the refrigerant in the compression refrigeration system (200),
b) for detecting a speed of the compressor (210),
c) for providing speed range classes of the compressor, each speed range class defining, for a speed range of the compressor, which counteracting measures from a list of possible measures are permissible, and
d) for controlling at least one actuator of the compression refrigeration system, in particular at least the throttle valve (230) and/or the compressor (210), based on the detected high pressure (HD) and the detected low pressure (ND),
wherein the control unit (500) is further configured for:
- determining, for the current speed of the compressor, a maximum permissible high pressure (HDmax), a minimum permissible high pressure (HDmin), a maximum permissible low pressure (NDmax) and a minimum permissible low pressure (NDmin),
- determining differences between the current high pressure and the minimum and maximum permissible high pressures, as well as differences between the current low pressure and the maximum and minimum permissible low pressures,
- determining the current speed range class for complying with the permissible counteracting measures,
- determining, for each permissible counteracting measure, a change factor of the actuator associated with the counteracting measure in dependence of at least one of the determined differences,
- controlling the compression refrigeration system (200) based on the determined change factors of the actuators.

11. The compression refrigeration system according to claim 10, wherein the refrigerant has a temperature glide, wherein the refrigerant in particular comprises or consists of R454c, and wherein the compression refrigeration system (200) includes in particular an internal heat exchanger (250) for transferring thermal energy of the refrigerant upstream of entry into the throttle valve (230) to the refrigerant upstream of entry into the compressor (210).

12. A heat pump (100) comprising a compression refrigeration system (200) according to claim 10 or 11.

## Revendications

1. Procédé de régulation d'une installation de réfrigération à compression (200) comportant :
- un fluide frigorigène,
- un évaporateur (240),
- un compresseur (210),
- un condenseur (220),
- un organe d'étranglement (230) et
- une unité de commande (500) destinée à
a) détecter une haute pression (HD) et une basse pression (ND) du fluide frigorigène dans l'installation de réfrigération à compression (200),
b) détecter la vitesse de rotation du compresseur (210),
c) fournir des catégories de plage de vitesses de rotation du compresseur, chaque catégorie de plage de vitesses de rotation définissant, pour une plage de vitesses de rotation du compresseur, quelles actions de rectification, dans une liste d'actions possibles, sont admissibles pour respecter la plage de travail admissible de composants de l'installation de réfrigération à compression (200), en particulier du compresseur (210), et
d) réguler au moins un actionneur de l'installation de réfrigération à compression, en particulier au moins l'organe d'étranglement (230) et/ou le compresseur (210), en fonction de la haute pression (HD) détectée et de la basse pression (ND) détectée, en particulier à l'aide d'un signal de réglage associé à l'actionneur concerné ;
le procédé comprenant les étapes suivantes consistant à :
- déterminer, pour la vitesse de rotation actuelle du compresseur, une haute pression maximale admissible (HDmax), une haute pression minimale admissible (HDmin), une basse pression maximale admissible (NDmax) et une basse pression minimale admissible (NDmin),
- déterminer des écarts entre la haute pression actuelle et la haute pression minimale et maximale admissible, ainsi que des écarts entre la basse pression actuelle et la basse pression maximale et minimale admissible,
- déterminer la catégorie de plage de vitesses de rotation actuelle pour obtenir les actions de rectification admissibles,
- déterminer, pour chaque action de rectification admissible, un facteur de modification du signal de réglage propre à l'action de rectification de l'actionneur en fonction d'au moins un des écarts déterminés,
- réguler l'installation de réfrigération à compression (200) en fonction des facteurs de modification déterminés des actionneurs.

2. Procédé selon la revendication 1, dans lequel la haute pression maximale admissible (HDmax), la haute pression minimale admissible (HDmin), la basse pression maximale admissible (NDmax) et la basse pression minimale admissible (NDmin) sont déterminées au moyen d'un diagramme caractéristique de vitesse de rotation du compresseur, en particulier par la lecture directe ou l'interpolation de valeurs mises sous forme de tableau.

3. Procédé selon l'une des revendications précédentes, ledit procédé comportant une étape de combinaison des facteurs de modification d'un même actionneur, sachant que, pour des facteurs de modification qui produiraient une modification agissant dans le même sens, l'étape de combinaison comprend en particulier une sélection du facteur de modification de l'actionneur concerné qui produit la plus grande modification.

4. Procédé selon l'une des revendications précédentes, ledit procédé comportant une étape de combinaison des facteurs de modification d'un même actionneur, sachant que, pour des facteurs de modification qui produiraient une modification agissant dans le sens inverse, l'étape de combinaison comprend en particulier une multiplication des facteurs de modification.

5. Procédé selon l'une des revendications précédentes, dans lequel l'unité de commande est conçue pour réguler l'organe d'étranglement (230), le compresseur (210), un ventilateur situé côté source de chaleur ou une pompe à saumure, et un actionneur situé côté dissipateur thermique tel qu'un circulateur.

6. Procédé selon l'une des revendications précédentes, dans lequel l'étape de régulation de l'installation de réfrigération à compression (200) en fonction des facteurs de modification comprend une multiplication des grandeurs de réglage des actionneurs par les facteurs de modification.

7. Procédé selon l'une des revendications précédentes, dans lequel la liste d'actions admissibles possibles comprend, pour plusieurs des actionneurs qui peuvent être régulés par l'unité de commande, une augmentation et une diminution du niveau de réglage concerné de l'actionneur.

8. Procédé selon l'une des revendications précédentes, dans lequel le facteur de modification est déterminé sous la forme d'une fonction, en particulier une fonction linéaire de premier ordre, d'au moins un des écarts jusqu'à une valeur seuil d'écart, le facteur de modification étant en particulier limité à une plage de valeurs comprises entre 0,5 et 1 pour les diminutions ou entre 1 et 2 pour les augmentations.

9. Procédé selon l'une des revendications précédentes, dans lequel l'étape de régulation prend en compte d'autres conditions secondaires du fonctionnement, en particulier un rapport de pression maximal entre la haute pression et la basse pression et/ou une valeur minimale pour une différence de pression entre la haute pression et la basse pression.

10. Installation de réfrigération à compression (200) comportant :
- un fluide frigorigène,
- un évaporateur (240),
- un compresseur (210),
- un condenseur (220),
- un organe d'étranglement (230) et
- une unité de commande (500) destinée à
a) détecter une haute pression (HD) et une basse pression (ND) du fluide frigorigène dans l'installation de réfrigération à compression (200),
b) détecter la vitesse de rotation du compresseur (210),
c) fournir des catégories de plage de vitesses de rotation du compresseur, chaque catégorie de plage de vitesses de rotation définissant, pour une plage de vitesses de rotation du compresseur, quelles actions de rectification d'une liste d'actions possibles sont admissibles, et
d) réguler au moins un actionneur de l'installation de réfrigération à compression, en particulier au moins l'organe d'étranglement (230) et/ou le compresseur (210), en fonction de la haute pression (HD) détectée et de la basse pression (ND) détectée ;
l'unité de commande (500) étant en outre conçue pour :
- déterminer, pour la vitesse de rotation actuelle du compresseur, une haute pression maximale admissible (HDmax), une haute pression minimale admissible (HDmin), une basse pression maximale admissible (NDmax) et une basse pression minimale admissible (NDmin),
- déterminer des écarts entre la haute pression actuelle et la haute pression minimale et maximale admissible, ainsi que des écarts entre la basse pression actuelle et la basse pression maximale et minimale admissible,
- déterminer la catégorie de plage de vitesses de rotation actuelle pour obtenir les actions de rectification admissibles,
- déterminer, pour chaque action de rectification admissible, un facteur de modification de l'actionneur propre à l'action de rectification en fonction d'au moins un des écarts déterminés,
- réguler l'installation de réfrigération à compression (200) en fonction des facteurs de modification déterminés des actionneurs.

11. Installation de réfrigération à compression selon la revendication 10, dans laquelle le fluide frigorigène présente un glissement de température, le fluide frigorigène comportant en particulier du R454c ou étant constitué de R454c et l'installation de réfrigération à compression (200) comportant en particulier un échangeur de chaleur interne (250) destiné à transmettre de l'énergie thermique du fluide frigorigène, avant son entrée dans l'organe d'étranglement (230), au fluide frigorigène avant son entrée dans le compresseur (210).

12. Pompe à chaleur (100) dotée d'une installation de réfrigération à compression (200) selon la revendication 10 ou 11.
